# EUROPÄISCHE PATENTANMELDUNG

(11) **EP 4 221 167 A1**
(43) Veröffentlichungstag der Anmeldung: **02.08.2023**
(21) Anmeldenummer: 23167402.9
(22) Anmeldetag: 28.02.2017
(51) Int. Cl.: H04M 1/19, H04M 1/68

(54) **TELEKOMMUNIKATIONSGERÄT, TELEKOMMUNIKATIONSSYSTEM, VERFAHREN ZUM BETRIEB EINES TELEKOMMUNIKATIONSGERÄTS UND COMPUTERPROGRAMM**

(30) Priorität: 29.02.2016 DE 102016203235
(62) Teilanmeldung aus: 17712710.7
(71) Anmelder: Fraunhofer-Gesellschaft zur Förderung der angewandten Forschung e.V., 80686 München (DE)
(72) Erfinder: Appell, Jens-Ekkehart, 26129 Oldenburg (DE); Rennies-Hochmuth, Jan, 26129 Oldenburg (DE)
(74) Vertreter: Burger, Markus

(57) **Zusammenfassung**

Ein Telekommunikationsgerät umfasst eine Audiosignalübertragungseinrichtung, die ausgelegt ist, um ein Audiosignal zu empfangen und zu einem weiteren Telekommunikationsgerät zu übertragen. Das Telekommunikationsgerät umfasst ferner eine Signalisierungseinrichtung, die ausgelegt ist, um eine Signalisierung auszugeben, wenn zu besorgen ist, dass das Audiosignal akustisch für Dritte verständlich ist oder eine Störung für Dritte darstellt. Ein weiteres Telekommunikationsgerät umfasst eine Audiosignalempfangseinrichtung, die ausgelegt ist, um ein Audiosignal von einem weiteren Telekommunikationsgerät zu empfangen und akustisch auszugeben sowie eine Signalisierungseinrichtung, die ausgelegt ist, um eine Signalisierung auszugeben, wenn zu besorgen ist, dass das ausgegebene Audiosignal akustisch für Dritte verständlich ist oder eine Störung darstellt.

Die Telekommunikationsgeräte können in einem System zusammengeschaltet werden.

Entsprechende Betriebsverfahren sowie ein Computerprogramm werden ebenfalls beschrieben.

## Beschreibung

### Technisches Gebiet

Ausführungsbeispiele gemäß der vorliegenden Erfindung beziehen sich auf ein Telekommunikationsgerät.

Weitere Ausführungsbeispiele gemäß der vorliegenden Erfindung beziehen sich auf ein Telekommunikationssystem.

Weitere Ausführungsbeispiele gemäß der vorliegenden Erfindung beziehen sich auf ein Verfahren zum Betrieb eines Telekommunikationsgeräts.

Weitere Ausführungsbeispiele gemäß der vorliegenden Erfindung beziehen sich auf ein Computerprogramm zur Durchführung der genannten Verfahren.

Ausführungsbeispiele gemäß der vorliegenden Erfindung beziehen sich auf eine Methode und ein Verfahren zur Messung und Präsentation des eigenen Sprachpegels bei der Telefonie.

### Hintergrund der Erfindung

In den letzten Jahrzehnten wurden die Möglichkeiten zur Übertragung von Sprachsignalen bzw. ganz allgemein Audiosignalen wesentlich verbessert. Insbesondere ist es heute möglich, Sprachsignale bzw. Audiosignale in sehr vielen Situationen zu übertragen, beispielsweise von zu Hause aus, aus dem Büro, aber auch von unterwegs. So ist beispielsweise eine mobile Telefonie heute in manchen Regionen fast flächendeckend möglich, und zwar auch von öffentlichen Orten aus sowie aus öffentlichen Verkehrsmitteln heraus.

Wenngleich die Möglichkeit, Telefonate nahezu überall führen zu können, das Leben der Menschen zum Teil wesentlich bereichert oder vereinfacht hat, so bringen die neuen Möglichkeiten doch auch gewisse Probleme mit sich. Beispielsweise fühlen sich viele Menschen gestört, wenn nahe von ihnen ein anderer Mensch telefoniert, da ein Telefonat oft unnatürlicher wirkt als eine direkte Unterhaltung zwischen zwei Menschen. Außerdem wurden auch Probleme im Hinblick auf die Vertraulichkeit von Gesprächen erkennbar, insbesondere wenn Gespräche, die früher nur aus einem privaten Umfeld oder aus einem Büro heraus geführt wurden, heutzutage über mobile Kommunikationsgeräte abgewickelt werden.

In Anbetracht dessen besteht ein Bedarf nach einem Konzept, das es ermöglicht, Beeinträchtigen anderer sowie auch Probleme der Vertraulichkeit, die sich aus der Nutzung von herkömmlichen Telekommunikationsgeräten ergeben, zu verringern.

### Zusammenfassung der Erfindung

Ein Ausführungsbeispiel gemäß der vorliegenden Erfindung schafft ein Telekommunikationsgerät. Das Telekommunikationsgerät umfasst eine Audiosignalübertragungseinrichtung, die ausgelegt ist, um ein Audiosignal zu empfangen und zu einem weiteren Telekommunikationsgerät zu übertragen. Das Telekommunikationsgerät umfasst ferner eine Signalisierungseinrichtung, die ausgelegt ist, um eine Signalisierung auszugeben, wenn zu besorgen ist (das heißt beispielsweise, wenn ein durch technische Parameter begründeter Anlass zu der Sorge besteht), dass das Audiosignal akustisch für Dritte verständlich ist oder eine Störung für Dritte darstellt.

Dieses Ausführungsbeispiel basiert auf der Erkenntnis, dass es wünschenswert ist, einen Benutzer durch eine Signalisierung zu informieren bzw. zu warnen, falls ein Audiosignal, das durch die Audiosignalübertragungseinrichtung zu einem weiteren Telekommunikationsgerät übertragen wird, auch für Dritte (also beispielsweise für andere Personen als den Sprecher auf der Seite des Telekommunikationsgeräts und den gewünschten Empfänger auf der Seite des weiteren Telekommunikationsgeräts) verständlich ist oder falls Dritte (sei es auf der Seite des Benutzers oder des Empfängers) durch das Audiosignal gestört werden.

Insbesondere wurde erkannt, dass eine Unterstützung des Benutzers durch eine in dem Telekommunikationsgerät enthaltene Signalisierungsvorrichtung sehr hilfreich ist, da ein Benutzer, der sich beispielsweise auf ein Telefonat konzentriert, oft nicht selbst wahrnimmt, dass er "zu laut" spricht. Durch die Signalisierungseinrichtung, die beispielsweise die Sprechlautstärke des Benutzers des Telekommunikationsgeräts und/oder die Sprachverständlichkeit des von dem Benutzer des Telekommunikationsgeräts erzeugten Audiosignals und/oder weitere technische Rahmenbedingungen (beispielsweise die Art oder Anordnung des Mikrofons, oder die Frage, ob eine Freisprecheinrichtung aufseiten des Telekommunikationsgeräts oder aufseiten eines weiteren Telekommunikationsgeräts, zu dem das Audiosignal übertragen wird, verwendet wird) berücksichtigt bzw. auswertet, kann somit ein Benutzer des Telekommunikationsgeräts unterstützt werden, und es kann eine Beeinträchtigung der Vertraulichkeit bzw. eine Störung von dritten Personen verringert oder unterbunden werden.

Die Signalisierung kann dabei in ganz verschiedener Weise erfolgen, beispielsweise optisch und/oder akustisch. Die Signalisierung kann direkt durch das Endgerät erfolgen, oder durch ein mit dem Endgerät drahtlos oder drahtgebunden verbundenes weiteres Gerät (beispielsweise durch ein mit dem Telekommunikationsgerät drahtlos oder drahtgebunden verbundenes Audio-Ausgabegerät und/oder ein durch ein mit dem Telekommunikationsgerät drahtgebunden oder drahtlos verbundenes weiteres elektronisches Gerät).

Bei Ausführungsbeispielen ist die Signalisierungseinrichtung ausgelegt, um zu bestimmen oder abzuschätzen, ob zu besorgen ist, dass das Audiosignal für einen Dritten, der sich in einer Umgebung des Telekommunikationsgeräts befindet, und der von einem Benutzer des Telekommunikationsgeräts verschieden ist, akustisch verständlich ist, und um die Signalisierung abhängig davon auszugeben. In anderen Worten, die Signalisierungseinrichtung kann ausgelegt sein, um zu bestimmen oder abzuschätzen, wie laut der Benutzer des Audiogeräts spricht (wobei das Audiosignal üblicherweise von dem Benutzer des Telekommunikationsgeräts erzeugt wird), was wiederum einen Rückschluss darauf zulässt, wie groß das Risiko ist, dass das Audiosignal für einen Dritten, der sich in der Umgebung des Telekommunikationsgeräts befindet, verständlich und/oder störend ist. Erkennt die Signalisierungseinrichtung (beispielsweise durch die Auswertung eines oder mehrere technischer Parameter), dass diese Wahrscheinlichkeit vergleichsweise groß ist (beispielsweise größer als eine vorgegebene Wahrscheinlichkeitsschwelle), so kann die Signalisierungseinrichtung die entsprechende Signalisierung ausgeben. Somit wird ein Benutzer der Telekommunikationseinrichtung rechtzeitig in Kenntnis gesetzt, wenn Dritte, die sich in seiner Nähe befinden, seine Äußerungen ohne Weiteres mitbekommen können bzw. wenn er Dritte, die sich in seiner Nähe befinden, über ein akzeptables Maß stören würde bzw. stört.

Bei einem Ausführungsbeispiel ist die Signalisierungseinrichtung ausgelegt, um eine Information darüber zu erhalten, ob zu besorgen ist, dass das Audiosignal für einen Dritten, der sich in einer Umgebung des weiteren Telekommunikationsgeräts befindet, und der von dem Benutzer des weiteren Telekommunikationsgeräts verschieden ist, akustisch verständlich ist, und um die Signalisierung abhängig davon auszugeben. Insofern kann der Benutzer des Telekommunikationsgeräts auch dann durch die Signalisierung gewarnt werden, wenn aufseiten seines Telekommunikationspartners (also an einem Ort, an dem sich das "weitere Telekommunikationsgerät" befindet) Dritte das von ihm Gesprochene mithören könnten. Dies könnte beispielsweise dann der Fall sein, wenn der Telekommunikationspartner, also der Benutzer des weiteren Telekommunikationsgeräts, eine Lautsprecheinrichtung (bzw. Lauthöreinrichtung) benutzt. Der Benutzer des Telekommunikationsgeräts könnte somit als Reaktion auf die Signalisierung beispielsweise seinen Telekommunikationspartner auffordern, Vertraulichkeit herzustellen (also beispielsweise die Lautsprecheinrichtung bzw. Lauthöreinrichtung abzuschalten) bzw. der Benutzer des Telekommunikationsgeräts könnte auch vertrauliche Informationen, die Dritten nicht offenbart werden sollen, zurückhalten, wenn sein Telekommunikationsgerät signalisiert, dass das Audiosignal für einen Dritten, der sich in der Umgebung des weiteren Telekommunikationsgeräts befindet, akustisch verständlich ist. Somit kann auch der Benutzer des Telekommunikationsgeräts reagieren, wenn die Gefahr besteht, dass die Vertraulichkeit des Telefonats nicht gewahrt ist.

Bei einem Ausführungsbeispiel kann die Signalisierungseinrichtung ausgelegt sein, um zu bestimmen oder abzuschätzen, ob zu besorgen ist, dass das Audiosignal für einen Dritten, der sich in seiner Umgebung des Telekommunikationsgeräts befindet, aber der von dem Telekommunikationsgerät zumindest einen vorgegebenen Abstand aufweist, verständlich ist. In anderen Worten, die Signalisierungseinrichtung kann bestimmen oder abschätzen, ob das Audiosignal (das beispielsweise auf der Sprache des Benutzers des Telekommunikationsgeräts basieren kann) auch noch in einem signifikanten Abstand von dem Telekommunikationsgerät verständlich ist. In anderen Worten, die Signalisierungseinrichtung kann beispielsweise feststellen, ob das Sprachsignal eine Lautstärke oder Sprachverständlichkeit aufweist, die erwarten lässt, dass das Sprachsignal nur nahe bei dem Telekommunikationsgerät verständlich ist (dies ist beispielsweise der Fall, wenn ein Benutzer unmittelbar in das Mikrofon seines Mobiltelefons spricht und dabei nicht allzu laut spricht), oder ob zu erwarten ist, dass das Sprachsignal auch noch in größerer Entfernung von dem Telekommunikationsgerät verständlich ist (dies ist beispielsweise der Fall, wenn der Benutzer des Telekommunikationsgeräts trotz geringem Hintergrundgeräusch vergleichsweise laut spricht). Somit kann die Signalisierungseinrichtung eine Signalisierung ausgeben, wenn zu erwarten ist, dass Dritte, deren Entfernung von dem Telekommunikationsgerät deutlich größer ist als eine normale Nutzungsentfernung bzw. Sprechentfernung, das Audiosignal noch vergleichsweise mühelos verstehen können. Insofern wird der Benutzer wiederum auf potentielle unerwünschte Mithörer bzw. auf potentiell gestörte Mitmenschen hingewiesen.

Bei einem Ausführungsbeispiel ist die Signalisierungseinrichtung ausgelegt, um das empfangene Audiosignal auszuwerten, und um zu bestimmen oder abzuschätzen, ob zu besorgen ist, dass das Audiosignal für einen Dritten, der sich in einer Umgebung des Telekommunikationsgeräts befindet, und der von einem Benutzer des Telekommunikationsgeräts verschieden ist, akustisch verständlich ist. Alternativ dazu kann die Signalisierungseinrichtung auch ausgelegt sein, um ein Signal von einem separaten Schallwandler (also beispielsweise von einem Schallwandler, der sich von dem für die Aufnahme einer elektrischen Darstellung des Audiosignals verwendeten Schallwandler unterscheidet) auszuwerten, um zu bestimmen oder abzuschätzen, ob zu besorgen ist, dass das Audiosignal für einen Dritten, der sich in einer Umgebung des Telekommunikationsgeräts befindet, und der von dem Benutzer des Telekommunikationsgeräts verschieden ist, akustisch verständlich ist. Während die erste Option (Auswertung des von der Audiosignalübertragungseinrichtung empfangenen typischerweise elektrischen Audiosignals) eine besonders einfache Implementierung ermöglicht, bringt die zweite Option (Verwendung eines separaten Schallwandlers) eine besonders hohe Zuverlässigkeit, da ein zweiter Signalweg eröffnet wird und da damit die Situation (Sprachlautstärke bzw. Sprachverständlichkeit) an dem Ort des Telekommunikationsgeräts (bzw. an dem Ort des separaten Schallwandlers) auch dann ausgewertet werden kann, wenn das Audiosignal beispielsweise von einem besonders angebrachten Schallwandler (beispielsweise von einem Mikrofon, das sich nahe bei dem Kopf des Benutzers befindet) aufgenommen wird. Somit kann durch Verwendung eines separaten Schallwandlers beispielsweise auch dann eine aussagekräftige Signalisierung erzeugt werden, wenn der Schallwandler (z. B. Mikrofon), der das Audiosignal aufnimmt, auf eine wirksame Unterdrückung von Umgebungsgeräuschen hin optimiert bzw. entsprechend angeordnet ist.

Bei einem Ausführungsbeispiel ist das Telekommunikationsgerät ausgelegt, um ein Signal von dem weiteren Telekommunikationsgerät zu empfangen, das anzeigt, ob zu besorgen ist, dass das Audiosignal nach Ausgabe durch einen Schallwandler des weiteren Telekommunikationsgeräts für eine Dritten, der sich in einer Umgebung des weiteren Telekommunikationsgeräts befindet, und der von einem Benutzer des weiteren Telekommunikationsgeräts verschieden ist, akustisch verständlich ist. Durch die entsprechende Ausgestaltung wird ermöglicht, dass das vorliegende Telekommunikationsgerät mit einem entfernten Telekommunikationsgerät (dem weiteren Telekommunikationsgerät) zusammenarbeitet und von diesem weiteren Telekommunikationsgerät eine Information darüber erhält, ob auf der Seite des weiteren Telekommunikationsgeräts ein besonderes Risiko besteht, dass unbefugte (oder unerwünschte) Dritte den Benutzer des vorliegenden Telekommunikationsgeräts verstehen können. Somit erhält der Benutzer des vorliegenden Telekommunikationsgeräts durch die Kommunikation mit dem weiteren Telekommunikationsgerät ein zusätzliches Maß an Kontrolle über mögliche ungewünschte Mithörer. Indem das vorliegende Telekommunikationsgerät die Signalisierung entsprechend (bzw. ansprechend) auf dem von dem weiteren Telekommunikationsgerät empfangenen Signal vornimmt, kann eine zuverlässige Signalisierung erfolgen, ohne dass der Benutzer des vorliegenden Telekommunikationsgeräts extra bei dem Nutzer des weiteren Telekommunikationsgeräts (gegebenenfalls wiederholt) nachfragen muss. Somit können auch wichtige und vertrauliche Telefonate entspannt durchgeführt werden.

Bei einem Ausführungsbeispiel ist die Signalisierungseinrichtung ausgelegt, um die Signalisierung abhängig von einem Sprachpegel eines Benutzers des Telekommunikationsgeräts auszugeben. Die Ausgabe der Signalisierung abhängig von dem Sprachpegel (im einfachsten Fall sogar ausschließlich basierend auf dem Sprachpegel) ermöglicht eine vergleichsweise einfache Realisierung der Signalisierungseinrichtung. Im Übrigen erlaubt der Sprachpegel bereits eine gewisse Aussage darüber, wie groß das Risiko ist, dass Dritte beispielsweise ein Telefonat ohne Weiteres mithören können bzw. durch ein Telefonat gestört werden.

Bei einem weiteren Ausführungsbeispiel ist die Signalisierungseinrichtung ausgelegt, um die Signalisierung abhängig von einer akustischen Lautstärke des Audiosignals an einem Ort des Telekommunikationsgeräts und/oder abhängig von einem elektrischen oder digitalisierten Signalpegel des empfangenen Audiosignals (in einer Repräsentation als elektrisches Signal) auszugeben. Eine derartige Realisierung der Signalisierungseinrichtung erlaubt eine vergleichsweise zuverlässige Signalisierung mit geringem Aufwand.

Bei einem weiteren bevorzugten Ausführungsbeispiel ist die Signalisierungseinrichtung ausgelegt, um eine Sprachverständlichkeit eines von einem Benutzer des Telekommunikationsgeräts erzeugten Sprachsignals für einen Dritten, der sich in einer Umgebung des Telekommunikationsgeräts befindet, zu bestimmen oder abzuschätzen. In diesem Fall ist die Signalisierungseinrichtung bevorzugt ausgelegt, um die Signalisierung abhängig davon auszugeben. Dieses Ausführungsbeispiel basiert auf der Erkenntnis, dass die Sprachverständlichkeit eine wichtige Größe ist, um zu entscheiden, ob ein Audiosignal akustisch für Dritte verständlich ist oder ob das Audiosignal eine Störung für Dritte darstellt. So birgt ein Sprachsignal mit einer verhältnismäßig niedrigen Sprachverständlichkeit ein vergleichsweise geringeres Risiko, dass unberechtigte Dritte mithören können, weshalb die Signalisierungseinrichtung bei Sprachsignalen mit vergleichsweise geringer Sprachverständlichkeit keine Signalisierung ausgeben sollte, während hingegen die Signalisierungseinrichtung bei Sprachsignalen mit vergleichsweise besserer Sprachverständlichkeit eine Signalisierung ausgeben sollte. Im Übrigen hat sich auch gezeigt, dass Dritte durch vergleichsweise gut verständliche Sprachsignale in der Regel auch mehr gestört werden als durch vergleichsweise schlecht verständliche Sprachsignale (die beispielsweise nur wenig lauter sind als Hintergrundgeräusche).

Bei einem Ausführungsbeispiel ist die Signalisierungseinrichtung ausgelegt, um eine akustische Umgebung des Telekommunikationsgeräts bei einer Bestimmung oder Berechnung der Sprachverständlichkeit zu berücksichtigen. Beispielsweise können Störgeräusche oder besondere Gegebenheiten des jeweiligen Ortes (Dämpfung, Echo, usw.) berücksichtigt werden. Somit kann die Signalisierungseinrichtung eine besonders aussagekräftige Information darüber erhalten, ob das Audiosignal akustisch für Dritte verständlich ist und/oder ob das Audiosignal eine Störung für Dritte darstellt. Damit wird die Aussagekraft der durch die Signalisierungseinrichtung erzeugten Signalisierung erhöht.

Bei einem Ausführungsbeispiel ist die Signalisierungsvorrichtung ausgelegt, um einen Störgeräuschpegel und/oder einen Störgeräuschfrequenzgehalt und/oder eine Störgeräuschmodulation/oder eine Störgeräusch-Rauschhaftigkeit und/oder eine Nachhallzeit bei der Bestimmung der Sprachverständlichkeit zu berücksichtigen. Durch die Berücksichtigung einer oder mehrerer der vorgenannten Kriterien durch die Signalisierungsvorrichtung kann mit vertretbarem technischen Aufwand eine besonders aussagekräftige Signalisierung erhalten werden.

Bei einem bevorzugten Ausführungsbeispiel ist die Signalisierungseinrichtung ausgelegt, um eine Information über eine Größe eines Gebiets, in dem zu besorgen ist, dass das Audiosignal akustisch für Dritte verständlich ist, zu bestimmen und auszugeben. Beispielsweise kann bestimmt oder abgeschätzt werden, in welchem Gebiet ein Verhältnis zwischen dem Audiosignal (z. B. Sprachsignal) und Störgeräuschen einen bestimmten Wert erreicht oder überschreitet, wobei ein solches Gebiet durch die Signalisierungseinrichtung als Gebiet interpretiert werden kann, in dem zu besorgen ist, dass das Audiosignal akustisch für Dritte verständlich ist. In anderen Worten, die Signalisierungseinrichtung kann die Signalisierung unter der Annahme erzeugen, dass das Audiosignal in einem Gebiet für Dritte verständlich ist oder zu einer Störung für Dritte führt, in dem die Sprachverständlichkeit (oder ein anderes Kriterium, das beispielsweise von einem Sprachpegel und/oder einer Sprachverständlichkeit abgeleitet sein kann) einen bestimmten Wert erreicht oder überschreitet. Durch eine entsprechende Signalisierung, und durch die Ausgabe einer Information über die Größe des Gebiets, in dem zu besorgen ist, dass das Audiosignal akustisch für Dritte verständlich ist, kann ein Benutzer auf die Gefahren des Mithörens hingewiesen werden. Die Bestimmung und Ausgabe einer Information über die Größe eines Gebiets, in dem zu besorgen ist, dass das Audiosignal akustisch für Dritte verständlich ist, ermöglicht dem Benutzer eine Abschätzung, ob Personen innerhalb des bestimmten Gebiets eine Bedrohung für seine Privatsphäre bzw. für die Privatheit des Gesprächs darstellen, und der Nutzer kann auch entsprechend reagieren, beispielsweise durch Herstellung einer ausreichenden Distanz zu seinen Mitmenschen oder durch Einschränkung eines Telefonats auf nicht bzw. wenig vertrauliche Inhalte.

In einem weiteren Ausführungsbeispiel ist die Signalisierungseinrichtung ausgelegt, um ein Maß für eine Störung Dritter durch das Audiosignal zu bestimmen und auszugeben. Auf diese Weise kann ein Benutzer, der beispielsweise in ein Telefongespräch vertieft ist, rechtzeitig gewarnt werden, bevor er beispielsweise umstehende Personen allzu sehr stört. Somit kann durch das Vorhandensein der Signalisierungsvorrichtung in dem Telekommunikationsgerät menschlichen Konflikten, wie beispielsweise einer Schlägerei in einem öffentlichen Verkehrsmittel, vorgebeugt werden.

Bei einem bevorzugten Ausführungsbeispiel kann das Telekommunikationsgerät ausgelegt sein, um akustische Eigenschaften der Umgebung des Telekommunikationsgeräts und/oder Nutzungsvorgaben in der Umgebung des Telekommunikationsgeräts zu erfassen und um das Maß für die Störung Dritter in Abhängigkeit davon zu bestimmen. So ist davon auszugehen, dass beispielsweise in einem ohnehin schon lauten Umfeld ein bestimmtes Audiosignal (beispielsweise ein Telefonat) von Dritten weniger störend wahrgenommen wird als dies beispielsweise in einem leisen Umfeld der Fall ist. Im Übrigen kann beispielsweise die Signalisierungseinrichtung in der Lage sein, um besondere Benutzungsbeschränkungen, wie beispielsweise ein Ruhegebot oder ein Telefonierverbot zu erkennen (wobei die Signalisierung der Nutzungsbeschränkungen beispielsweise über verschiedene Kommunikationswege, wie beispielsweise eine Schnurlos-Netzwerk-Kommunikation, eine Nahfeldkommunikation oder eine anderweitige Markierung erfolgen kann) und bei der Erzeugung der Signalisierung zu berücksichtigen. Auf diesem Wege kann durch eine technische Maßnahme der Tatsache Rechnung getragen werden, dass eine Toleranzschwelle beispielsweise für ein Telefonat in einer Ruhezone (z. B. in einem Krankenhaus oder einem Schlafwagenbereich eines Zuges) geringer sein kann als in anderen Regionen. Somit kann der Benutzer des Telekommunikationsgeräts rechtzeitig gewarnt werden, bevor Toleranzschwellen von Mitmenschen überschritten werden.

Bei einem weiteren Ausführungsbeispiel ist das Telekommunikationsgerät ausgelegt, um eine Störungssignalisierung von einem Drittgerät, das von dem weiteren Telekommunikationsgerät verschieden ist, zu empfangen. In dem Fall ist die Signalisierungseinrichtung ausgelegt, um eine Auswertung, ob zu besorgen ist, dass das Audiosignal akustisch für Dritte verständlich ist oder eine Störung für Dritte darstellt, abhängig von der StörungsSignalisierung auszulösen, oder um die Störungssignalisierung bei der Auswertung zu berücksichtigen. Durch diese Ausführung wird es ermöglicht, dass Dritte (also beispielsweise ein Benutzer eines Drittgeräts) dem Telekommunikationsgerät eine Nachricht senden können, dass eine Störung besteht (beispielsweise, dass dessen Nutzer zu laut spricht). Das Telekommunikationsgerät kann eine solche Nachricht aber beispielsweise nicht nur unreflektiert an den Benutzer weitergeben, sondern auch, durch Verwendung der Signalisierungseinrichtung prüfen, ob tatsächlich eine Störung Dritter zu besorgen ist. Somit kann einerseits eine Störungssignalisierung durch einen Dritten von der Signalisierungseinrichtung als Anlass für eine Überprüfung, ob tatsächlich eine Störung zu besorgen ist, genommen werden, nicht jede (möglicherweise unberechtigte) Störungssignalisierung eines Dritten führt aber automatisch zu einer störenden Benachrichtigung des Nutzers des Telekommunikationsgeräts. Die Störungssignalisierung durch einen Dritten kann beispielsweise durch die Signalisierungseinrichtung verwendet werden, um Schwellwerte, anhand derer entschieden wird, ob eine Signalisierung erfolgt, zu erhöhen oder zu erniedrigen. Beispielsweise kann die Störungssignalisierung durch den Dritten die Empfindlichkeit der Signalisierungseinrichtung dahin gehend erhöhen, dass schon bei geringeren Sprachpegeln des Benutzers des Telekommunikationsgeräts von der Möglichkeit einer Störung Dritter ausgegangen wird und eine Signalisierung erfolgt.

Somit wird erreicht, dass Störungssignalisierungen durch Dritte einen Einfluss auf die Signalisierungseinrichtung haben, ohne dass jede Störungssignalisierung eines Dritten notwendigerweise zu der Ausgabe einer Signalisierung durch Signalisierungseinrichtung führt (was wiederum sehr störend für den Benutzer des Telekommunikationsgeräts sein könnte).

Ein weiteres Ausführungsbeispiel gemäß der Erfindung schafft ein Telekommunikationsgerät. Das Telekommunikationsgerät umfasst eine Audiosignalempfangseinrichtung, die ausgelegt ist, um ein Audiosignal von einem weiteren Telekommunikationsgerät zu empfangen und akustisch auszugeben. Das Telekommunikationsgerät umfasst ferner eine Signalisierungseinrichtung, die ausgelegt ist, um eine Signalisierung auszugeben, wenn zu besorgen ist, dass das ausgebebene Audiosignal akustisch für Dritte verständlich ist oder eine Störung für Dritte darstellt.

Das entsprechende Telekommunikationsgerät bietet somit die Möglichkeit, dass nicht nur Störungen durch das Sprachsignal des Benutzers des Telekommunikationsgeräts, sondern auch Störungen durch ein von einem weiteren Telekommunikationsgerät empfangenes und akustisch ausgegebenes Audiosignal signalisiert werden können. Somit kann beispielsweise gegenüber dem Benutzer des Telekommunikationsgeräts signalisiert werden, wenn zu besorgen ist, dass Dritte unbefugt das von einem entfernten Gesprächspartner Gesagte verstehen können. In ähnlicher Weise kann gegenüber dem Benutzer des Telekommunikationsgeräts signalisiert werden, wenn beispielsweise die Benutzung einer Lautsprechfunktion bzw. Lauthörfunktion des Telefons zu Störungen der Mitmenschen führen kann. Weiterhin kann die Signalisierung aber auch gegenüber dem weiteren, entfernten Telekommunikationsgerät erfolgen, so dass der Benutzer des weiteren, entfernten Telekommunikationsgeräts darauf aufmerksam gemacht werden kann, wenn die Vertraulichkeit dadurch gestört wird, dass das von ihm Gesprochene aufseiten des Telekommunikationsgeräts so laut ausgegeben wird, dass zu besorgen ist, dass Dritte mithören können. Insoweit kann das hier beschriebene Telekommunikationsgerät auch mit dem weiter oben schon beschriebenen Telekommunikationsgerät zusammenwirken, und ein Telekommunikationsteilnehmer kann gewarnt werden, wenn sein entfernter Gesprächspartner beispielsweise die Lautsprecheinrichtung nutzt, so dass Dritte mithören können.

Bei einem Ausführungsbeispiel kann die Signalisierungseinrichtung ausgelegt sein, um zu bestimmen oder abzuschätzen, ob zu besorgen ist, dass das Audiosignal für einen Dritten, der sich in einer Umgebung des Telekommunikationsgeräts befindet, und der von einem Benutzer des Telekommunikationsgeräts verschieden ist, akustisch verständlich ist. Die Signalisierungseinrichtung kann ferner ausgelegt sein, um die Signalisierung abhängig davon (also abhängig von der oben genannten Bestimmung bzw. Abschätzung) auszugeben.

Bei einem weiteren Ausführungsbeispiel kann die Signalisierungseinrichtung ausgelegt sein, um zu bestimmen oder abzuschätzen, ob zu besorgen ist, dass das Audiosignal für einen Dritten, der sich in einer Umgebung des Telekommunikationsgeräts befindet, aber der von dem Telekommunikationsgerät mehr als einen vorgegebenen Abstand aufweist, verständlich ist. Auf diese Weise kann dem Umstand Rechnung getragen werden, dass ein "rechtmäßiger" Benutzer des Telekommunikationsgeräts das empfangene und akustisch ausgegebene Audiosignal ja wahrnehmen soll, während hingegen das empfangene und akustisch ausgegebene Audiosignal für Dritte, die typischerweise weiter von dem Telekommunikationsgerät entfernt sind als dessen rechtmäßiger Nutzer, nicht verständlich sein soll.

Bei einem weiteren Ausführungsbeispiel ist die Signalisierungseinrichtung ausgelegt, um eine Signalisierung abhängig von einer Lautstärke, mit der das Audiosignal akustisch ausgegeben wird, zu bestimmen. Das Ausführungsbeispiel basiert auf der Erkenntnis, dass die Lautstärke, mit der das Audiosignal akustisch ausgegeben wird, ein wichtiges Kriterium dafür darstellt, ob zu besorgen ist, dass das ausgegebene Audiosignal akustisch für Dritte verständlich ist oder eine Störung für Dritte darstellt.

Bei einem weiteren Ausführungsbeispiel ist die Signalisierungseinrichtung ausgelegt, um die Signalisierung abhängig davon zu bestimmen, ob das Audiosignal über einen für eine direkte Wiedergabe für einen einzelnen Benutzer bestimmten Schallwandler oder über einen für eine entfernte Wiedergabe an einen oder mehrere Benutzer bestimmten Schallwandler ausgegeben wird. Somit kann die Signalisierungseinrichtung beispielsweise der Tatsache Rechnung tragen, dass ein über einen internen Lautsprecher eines Mobiltelefons ausgegebenes Audiosignal für Dritte, deren Ohr von dem Mobiltelefon vergleichsweise weit entfernt ist, kaum verständlich ist, während hingegen eine akustische Wiedergabe des empfangen Audiosignals über eine Freisprecheinrichtung (also über einen für eine entfernte Wiedergabe an einen oder mehrere Benutzer bestimmten Schallwandler) typischerweise gut für Dritte verständlich ist. Somit kann beispielsweise die Signalisierungseinrichtung ausgelegt sein, um Charakteristika (z. B. Abstrahlungscharakteristika bzw. Richtcharakteristika) eines Schallwandlers, der für die Ausgabe des empfangenen Audiosignals verwendet wird, bei der Erzeugung der Signalisierung bzw. bei der Entscheidung darüber, ob eine Signalisierung ausgegeben werden soll oder nicht, zu berücksichtigen.

Bei einem weiteren Ausführungsbeispiel ist die Signalisierungseinrichtung ausgelegt, um eine Sprachverständlichkeit eines von einem Schallwandler des Telekommunikationsgeräts erzeugten Sprachsignals für einen Dritten, der sich in einer Umgebung des Telekommunikationsgeräts befindet, zu bestimmen oder abzuschätzen. Die Signalisierungseinrichtung kann in diesem Fall ausgelegt sein, um diese Signalisierung abhängig davon (also abhängig von der bestimmten oder abgeschätzten Sprachverständlichkeit) auszugeben. Auf diese Weise kann die Signalisierung realistisch an die Gegebenheiten angepasst werden, indem z. B. bei einer gegebenen Lautstärke des von dem Schallwandler des Telekommunikationsgeräts erzeugten Sprachsignals nur dann eine Signalisierung erfolgt, wenn ein Umgebungsgeräuschpegel vergleichsweise niedrig ist (aber nicht, wenn ein Umgebungssignalpegel vergleichsweise hoch ist).

Bei einem weiteren Ausführungsbeispiel ist das Telekommunikationsgerät ausgelegt, um die Signalisierung über einen Übertragungsweg an das weitere Telekommunikationsgerät zu senden. Dadurch kann einem Benutzer des weiteren Telekommunikationsgeräts signalisiert werden, dass das Risiko des Mithörens durch einen unbefugten Dritten besteht, woraufhin der Benutzer des weiteren Telekommunikationsgeräts beispielsweise sein Telefonierverhalten anpassen kann.

Ein weiteres Ausführungsbeispiel schafft ein Telekommunikationssystem zum Übertragen eines Audiosignals von einem ersten Telekommunikationsgerät zu einem zweiten Telekommunikationsgerät. Das Telekommunikationssystem umfasst ein erstes Telekommunikationsgerät mit einer Audiosignalübertragungseinrichtung, die ausgelegt ist, um ein Audiosignal von einem Benutzer zu empfangen und zu einem weiteren Telekommunikationsgerät zu übertragen. Das Telekommunikationssystem umfasst ferner ein zweites Telekommunikationsgerät mit einer Audiosignalempfangseinrichtung, die ausgelegt ist, um ein Audiosignal von dem ersten Telekommunikationsgerät zu empfangen und akustisch auszugeben, und einer Signalisierungseinrichtung, die ausgelegt ist, um ein Signalisierungssignal an das erste Telekommunikationsgerät auszugeben, wenn zu besorgen ist, dass das durch das zweite Telekommunikationsgerät ausgegebene Audiosignal akustisch für Dritte verständlich ist oder eine Störung für Dritte darstellt. Das erste Telekommunikationsgerät umfasst ferner eine Signalisierungseinrichtung, die ausgelegt ist, um ansprechend auf ein von dem zweiten Telekommunikationsgerät empfangenes Signalisierungssignal eine Signalisierung auszugeben, um gegenüber einem Benutzer des ersten Telekommunikationsgeräts zu signalisieren, dass zu besorgen ist, dass das durch das zweite Telekommunikationsgerät ausgegebene Audiosignal akustisch für Dritte verständlich ist oder eine Störung für Dritte darstellt. Durch das entsprechende Systemkonzept kann beispielsweise ein Benutzer des ersten Telekommunikationsgeräts gewarnt werden, wenn aufseiten des zweiten Telekommunikationsgeräts sein Sprachsignal so laut ausgegeben wird, dass dieses für Dritte verständlich ist oder dass dieses Dritte stört. Somit können Sicherheitslöcher bei der Kommunikation über die Telekommunikationsgeräte gering gehalten werden.

Ein weiteres Ausführungsbeispiel schafft ein Verfahren zum Betrieb eines Telekommunikationsgeräts. Das Verfahren umfasst ein Empfangen eines Audiosignals sowie ein Übertragen des Audiosignals zu einem weiteren Telekommunikationsgerät. Das Verfahren umfasst zudem ein Ausgeben einer Signalisierung, wenn zu besorgen ist, dass das Audiosignal akustisch für Dritte verständlich ist oder eine Störung für Dritte darstellt. Das Verfahren basiert auf den gleichen Überlegungen wie die oben beschriebenen Telekommunikationsgeräte.

Ein weiteres Ausführungsbeispiel schafft ein weiteres Verfahren zum Betrieb eins Telekommunikationsgeräts. Dieses Verfahren umfasst ein Empfangen eines Audiosignals von einem weiteren Telekommunikationsgerät sowie ein akustisches Ausgeben des empfangenen Audiosignals. Das Verfahren umfasst ferner ein Ausgeben einer Signalisierung, wenn zu besorgen ist, dass das ausgegebene Audiosignal akustisch für Dritte verständlich ist oder eine Störung für Dritte darstellt. Dieses Verfahren basiert ebenfalls auf den gleichen Überlegungen wie die oben beschriebenen Telekommunikationsgeräte.

Ein weiteres Ausführungsbeispiel schafft ein Computerprogramm zur Durchführung der genannten Verfahren, wenn das Computerprogramm auf einem Computer ausgeführt wird.

Das Computerprogramm basiert ebenso auf den gleichen Überlegungen wie die genannten Verfahren bzw. die genannten Telekommunikationsgeräte.

### Figurenkurzbeschreibung

Ausführungsbeispiele gemäß der vorliegenden Erfindung werden nachfolgend Bezug nehmend auf die beiliegenden Figuren näher erläutert. Es zeigen:
- Fig. 1: ein Blockschaltbild eines Telekommunikationsgeräts gemäß einem Ausführungsbeispiel der vorliegenden Erfindung;
- Fig. 2: ein Blockschaltbild eines Telekommunikationsgeräts gemäß einem weiteren Ausführungsbeispiel der vorliegenden Erfindung;
- Fig. 3: ein Blockschaltbild eines Telekommunikationsgeräts gemäß einem weiteren Ausführungsbeispiel der vorliegenden Erfindung;
- Fig. 4: ein Blockschaltbild eines Telekommunikationsgeräts gemäß einem weiteren Ausführungsbeispiel der vorliegenden Erfindung;
- Fig. 5: ein Blockschaltbild einer Signalisierungseinrichtung gemäß einem Ausführungsbeispiel der vorliegenden Erfindung;
- Fig. 6: ein Blockschaltbild eines Telekommunikationsgeräts gemäß einem Ausführungsbeispiel der vorliegenden Erfindung;
- Fig. 7: ein Blockschaltbild eines Telekommunikationssystems gemäß einem Ausführungsbeispiel der vorliegenden Erfindung;
- Fig. 8: ein Flussdiagramm eines Verfahrens gemäß einem Ausführungsbeispiel der vorliegenden Erfindung; und
- Fig. 9: ein Flussdiagramm eines Verfahrens gemäß einem weiteren Ausführungsbeispiel der vorliegenden Erfindung.

### Detaillierte Beschreibung der Ausführungsbeispiele

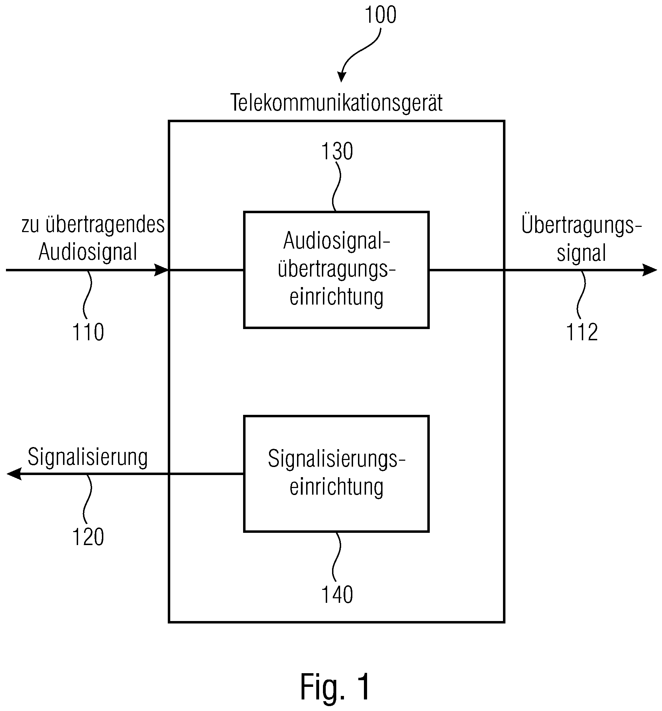

### 1. Ausführungsbeispiel gemäß Fig. 1

Fig. 1 zeigt ein Blockschaltbild eines Telekommunikationsgeräts gemäß einem Ausführungsbeispiel der vorliegenden Erfindung.

Das Telekommunikationsgerät 100 ist ausgelegt, um ein zu übertragenes Audiosignal 110 zu empfangen, und um basierend darauf ein Übertragungssignal 112, das das zu übertragende Audiosignal in codierter oder uncodierter Darstellung umfasst, bereitzustellen. Das Telekommunikationsgerät 100 ist ferner ausgelegt, um eine Signalisierung 120 gegenüber einem Benutzer auszugeben. Das Telekommunikationsgerät 100 umfasst eine Audiosignalübertragungseinrichtung 130, die ausgelegt ist, um das Audiosignal 110 zu empfangen und zu einem weiteren Telekommunikationsgerät zu übertragen. Zu diesem Zweck wird bevorzugt das Übertragungssignal 112 bereitgestellt. Das Telekommunikationsgerät 100 umfasst ferner eine Signalisierungseinrichtung 140, die ausgelegt ist, um die Signalisierung 120 auszugeben, wenn zu besorgen ist, dass das Audiosignal akustisch für Dritte verständlich ist oder eine Störung für Dritte darstellt.

Im Folgenden wird die Funktionsweise des Telekommunikationsgeräts 100 näher erläutert. Hierbei wird davon ausgegangen, dass ein Benutzer des Telekommunikationsgeräts 100 ein Audiosignal (beispielsweise ein Sprachsignal, alternativ aber auch ein Musiksignal oder ein sonstiges Audiosignal) als akustisches Signal erzeugt. Dieses akustische Signal kann entweder unmittelbar von dem Telekommunikationsgerät 100 aufgenommen werden (z. B. unter Verwendung eines in dem Telekommunikationsgerät 100 enthaltenen Mikrofons), oder es kann durch einen externen Schallwandler ein elektrisches oder optisches Signal erzeugt werden, das das von dem Benutzer des Telekommunikationsgeräts 100 erzeugte akustische Signal repräsentiert. Diese elektrische, optische oder digitalisierte Darstellung des akustischen Signals wird hierin genauso als "Audiosignal" bezeichnet wie das akustische Signal, das der Benutzer des Telekommunikationsgeräts 100 von sich gibt. Die Audiosignalübertragungseinrichtung 130 kann somit die elektrische oder optische Darstellung oder digitalisierte Version des Audiosignals verarbeiten und in eine geeignete Signalform umwandeln, die für eine Übertragung zu einem weiteren Telekommunikationsgerät geeignet ist. Das Übertragungssignal 112, das neben möglichen Zusatzinformationen (beispielsweise Signalisierungsinformationen, Fehlerschutzinformationen, Metadateninformationen, usw.) insbesondere das zu übertragende Audiosignal 110 darstellt, kann an ein verwendetes Übertragungsmedium angepasst sein. Beispielsweise kann das Übertragungssignal 112 für eine Übertragung in einem Telefonnetz angepasst sein. Alternativ dazu kann das Übertragungssignal 110 für eine Übertragung in einem drahtgebundenen oder drahtlosen Datennetz angepasst sein. Die Audiosignalübertragungseinrichtung 130 kann daher das zu übertragende Audiosignal in digitaler oder in analoger Form zu dem Übertragungssignal 112 hinzufügen. Beispielsweise kann die Audiosignalübertragungseinrichtung 130 das Audiosignal 110 digitalisieren (sofern das Audiosignal 110 noch nicht in digitalisierter Form vorliegt) und das digitalisierte Signal in einer Bitraten-effizienten Weise komprimiert zu dem Übertragungssignal 112 hinzufügen. Allerdings kann die Audiosignalübertragungseinrichtung 130 das zu übertragende Audiosignal 110 ebenso gut in unkomprimierter Form zu dem Übertragungssignal 112 hinzufügen. Was die Darstellung des zu übertragenden Audiosignals 110 in dem Übertragungssignal 112 anbelangt, so kann hier auf sämtliche bekannten Konzepte zur analogen oder digitalen Übertragung von Audiosignalen zurückgegriffen werden.

Die Signalisierungseinrichtung 140 ist ausgelegt, um eine Signalisierung beispielsweise gegenüber dem Benutzer des Telekommunikationsgeräts 100 auszugeben, wenn beispielsweise aufgrund einer Regel-basierten Auswertung von einem oder mehreren Audiosignalen bzw. aufgrund von sonstigen Signalisierungssignalen die Signalisierungseinrichtung darauf schließt, dass zu besorgen ist, dass das Audiosignal akustisch für Dritte verständlich ist und/oder eine Störung für Dritte darstellt. In anderen Worten, die Signalisierungseinrichtung kann beispielsweise vorgegebene Entscheidungsregeln auswerten und anhand eines Auswertungsergebnisses entscheiden, ob eine Signalisierung ausgegeben werden soll oder nicht, wobei die Signalisierung beispielsweise dann ausgegeben wird, wenn das Ergebnis der Auswertung der Entscheidungsregel zu einem Ergebnis führt, für das vorab definiert wurde, dass es das Vorliegen einer problematischen Situation (also beispielsweise einer Situation, in der zu besorgen ist, dass das Audiosignal akustisch für Dritte verständlich ist oder eine Störung für Dritte darstellt) anzeigt.

Die Signalisierung kann beispielsweise optisch oder akustisch erfolgen. Die Signalisierungseinrichtung kann hierbei entweder unmittelbar ein Signalisierungselement (z. B. eine Leuchtdiode oder einen akustischen Signalgeber) ansteuern, oder kann eine Nachricht an eine übergeordnete Ablaufsteuerung weitergeben, die dann beispielsweise die letzte Verantwortung für die Ausgabe eines optischen oder akustischen Signals hat. Die übergeordnete Ablaufsteuerung kann beispielsweise ein Mikroprozessor bzw. Mikrocontroller des Telekommunikationsgeräts sein, der für Display-Ausgaben oder für die Erzeugung von Signalisierungstönen verantwortlich ist.

Somit ermöglicht es das Telekommunikationsgerät 100, einem Nutzer gegenüber zu signalisieren, wenn eine problematische Situation vorliegt, in der zu besorgen ist, dass das Audiosignal akustisch für Dritte verständlich ist oder in der zu besorgen ist, dass das Audiosignal eine Störung für Dritte darstellt. Damit kann im ersten Fall eine Vertraulichkeit der Kommunikation verbessert werden, da der Benutzer durch die Signalisierung daran erinnert werden kann, wenn zu besorgen ist, dass unbefugte Dritte das von ihm Gesprochene mithören können. In einem zweiten Fall können soziale Konflikte vermieden werden, indem der Benutzer der Telekommunikationseinrichtung rechtzeitig darauf hingewiesen wird, wenn er zu laut spricht (sei es absolut zu laut oder lauter als dies in Anbetracht der Hintergrundgeräusche unbedingt erforderlich oder angemessen wäre).

Im Übrigen kann die Signalisierung auch dann erfolgen, wenn die Signalisierungseinrichtung beispielsweise durch eine entsprechende Nachricht von einem weiteren Telekommunikationsgerät eine Information dahin gehend erlangt, dass das von dem Benutzer des Telekommunikationsgeräts Gesprochene an anderer Stelle akustisch für unbefugte Dritte verständlich gemacht wird.

Weitere Details im Hinblick auf die Signalisierungseinrichtung werden im Folgenden noch besch rieben.

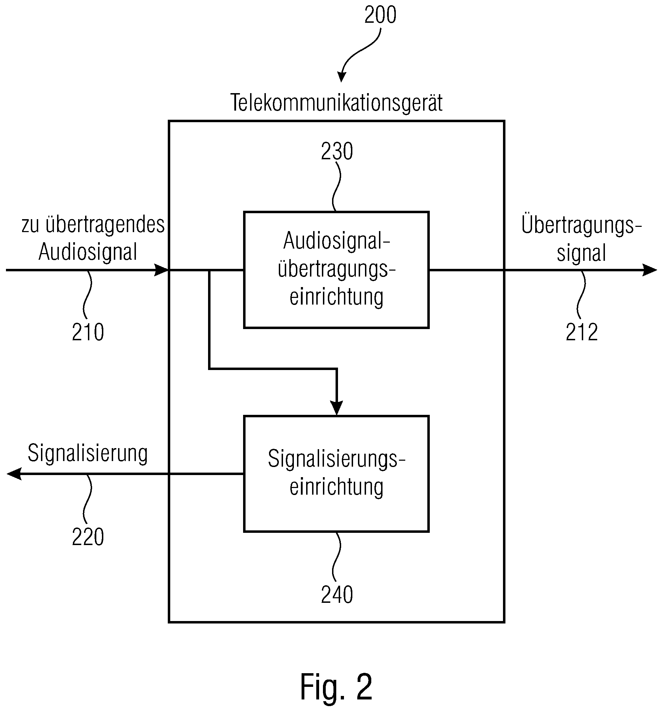

### 2. Ausführungsbeispiel gemäß Fig. 2

Fig. 2 zeigt ein Blockschaltbild eines Telekommunikationsgeräts 200 gemäß einem Ausführungsbeispiele der vorliegenden Erfindung. Das Telekommunikationsgerät 200 ist ausgelegt, um ein zu übertragendes Audiosignal 210 zu empfangen und ein Übertragungssignal 212 bereitzustellen. Das Telekommunikationsgerät 200 umfasst eine Audiosignalübertragungseinrichtung 230 und eine Signalisierungseinrichtung 240. Diesbezüglich sei darauf hingewiesen, dass für das Audiosignal 210 das oben im Hinblick auf das Audiosignal 110 Gesagte gilt. Im Hinblick auf das Übertragungssignal 212 gilt das oben im Hinblick auf das Übertragungssignal 112 Gesagte, und im Hinblick auf die Audiosignalübertragungseinrichtung 230 gilt das oben im Hinblick auf die Audiosignalübertragungseinrichtung 130 Gesagte.

Die Signalisierungseinrichtung 240 ist ausgelegt, um das zu übertragende Audiosignal 210 (beispielsweise in Form einer Darstellung als elektrisches oder optisches Signal, oder in Form einer Darstellung als Digitalsignal) zu empfangen. Die Signalisierungseinrichtung 240 ist ausgelegt, um die Signalisierung 220 basierend auf dem zu übertragenden Audiosignal 210 zu erzeugen.

Beispielsweise ist die Signalisierungseinrichtung 240 ausgelegt, um einen Sprachpegel des Audiosignals 210 zu bestimmen und/oder um einen Sprachverständlichkeit des Audiosignals 210 zu bestimmen. Ferner kann die Signalisierungseinrichtung 240 ausgelegt sein, um den bestimmten Sprachpegel und/oder die bestimmte Sprachverständlichkeit zu bewerten (beispielsweise mit einem vorgegebenen oder variablen Referenzwert zu vergleichen) und basierend auf dem Ergebnis des Vergleichs die Signalisierung auszugeben oder nicht.

Somit wird es ermöglicht, mit geringem technischen Aufwand gegenüber dem Benutzer des Telekommunikationsgeräts zu signalisieren, wenn zu besorgen ist, dass das Audiosignal akustisch für Dritte verständlich ist oder eine Störung für Dritte darstellt. Das Ergebnis, dass die Signalisierungseinrichtung durch Auswertung der oben beschriebenen Auswertungsregel erhält, wird hier als vergleichsweise zuverlässige Information darüber, ob die Verständlichkeit des Audiosignals durch Dritte zu besorgen ist bzw. ob eine Störung für Dritte zu besorgen ist, angesehen.

Insofern ist das entsprechende Telekommunikationsgerät gut dazu geeignet, den Benutzer über mögliche Sicherheitsrisiken bzw. Störungen von benachbarten Mitmenschen zu warnen.

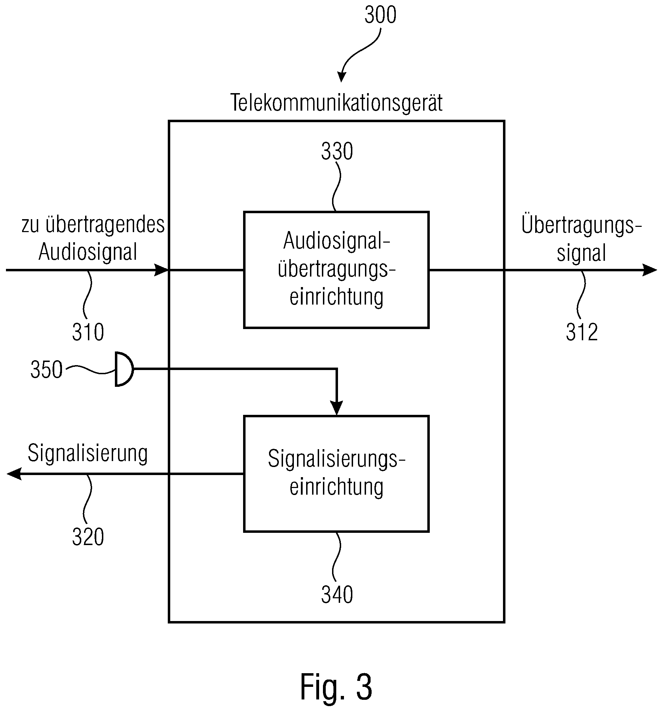

### 3. Ausführungsbeispiel gemäß Fig. 3

Fig. 3 zeigt ein Blockschaltbild eines Telekommunikationsgeräts gemäß einem weiteren Ausführungsbeispiel der Erfindung.

Das Telekommunikationsgerät 300 gemäß Fig. 3 ist ausgelegt, um ein zu übertragendes Audiosignal 310 zu empfangen und basierend darauf ein Übertragungssignal 312 bereitzustellen. Ferner ist das Telekommunikationsgerät 300 ausgelegt, um eine Signalisierung 320 bereitzustellen. Diesbezüglich sei darauf hingewiesen, dass das zu übertragende Audiosignal 310 den Audiosignalen 110, 210 entspricht. Das Übertragungssignal 312 entspricht den Übertragungssignalen 112, 212. Somit gilt das oben Gesagte. Das Telekommunikationsgerät 310 umfasst weiterhin eine Audiosignalübertragungseinrichtung 330, die der Audiosignalübertragungseinrichtung 230 bzw. der Audiosignalübertragungseinrichtung 130 entspricht.

Das Telekommunikationsgerät 300 umfasst ferner einen Schallwandler 350, der beispielsweise ein Mikrofon oder ein ähnliches Bauteil aufweisen kann. Das Telekommunikationsgerät 300 umfasst ferner eine Signalisierungseinrichtung 340, die von ihrer grundlegenden Funktionalität der Signalisierungseinrichtung 140 bzw. der Signalisierungseinrichtung 240 entsprechen kann. Allerdings ist die Signalisierungseinrichtung 340 beispielsweise ausgelegt, um ein Mikrofonsignal von dem Mikrofon bzw. Schallwandler 350 zu empfangen. Die Signalisierungseinrichtung 340 kann somit beispielsweise das Mikrofonsignal von dem (separaten) Schallwandler 350 anstelle des zu übertragenden Audiosignals 310 verwenden, um somit basierend auf dem Mikrofonsignal von dem Mikrofon 350 zu entscheiden, ob eine Signalisierung 320 ausgegeben werden soll oder nicht. Die Signalisierungseinrichtung 340 kann Im Übrigen - optional - zusätzlich auch das zu übertragende Audiosignal 310 in die Auswertung mit einbeziehen.

Somit ist es möglich, durch einen separaten Schallwandler, der beispielsweise eine andere Charakteristik haben kann als der zur Aufnahme des zu übertragenden Audiosignals 310 verwendete Schallwandler, eine Information darüber zu erlangen, wie sehr beispielsweise die Sprache des Benutzers der Telekommunikationseinrichtung 300 Mitmenschen in einer Umgebung des Benutzers stört bzw. wie gut die Sprachäußerungen des Benutzers in einer Umgebung wahrnehmbar (und damit für Dritte verständlich) sind. Die Verwendung eines separaten Schallwandlers kann hier vorteilhaft sein, da der Schallwandler, der zur Erzeugung des zu übertragenden Audiosignals 310 verwendet wird, beispielsweise daraufhin optimiert sein kann, das Sprachsignal des Benutzers aufzunehmen. Der weitere Schallwandler 350 hingegen kann beispielsweise dazu angepasst sein, Umgebungsgeräusche stärker aufzunehmen als der zur Erzeugung des zu übertragenden Audiosignals 310 verwendete Schallwandler. Im Übrigen kann sich der Schallwandler 350 typischerweise an einem anderen Ort befinden als der zur Aufnahme des zu übertragenden Audiosignals 310 verwendete Schallwandler. Insofern ist festzuhalten, dass der separate Schallwandler 350 in vielen Situationen ein realistischeres Bild davon geben kann, wie gut die Sprache des Benutzers des Telekommunikationsgeräts 300 für Dritte verständlich ist bzw. wie groß das Störungspotential für Dritte ist, das von der Sprache des Benutzers des Telekommunikationsgeräts 300 ausgeht.

Im Übrigen ist festzuhalten, dass das Telekommunikationsgerät 300 einige Vorteile gegenüber den oben beschriebenen Telekommunikationsgeräten mit sich bringt, wobei allerdings höhere Kosten durch die Verwendung eines separaten Schallwandlers 350 anfallen.

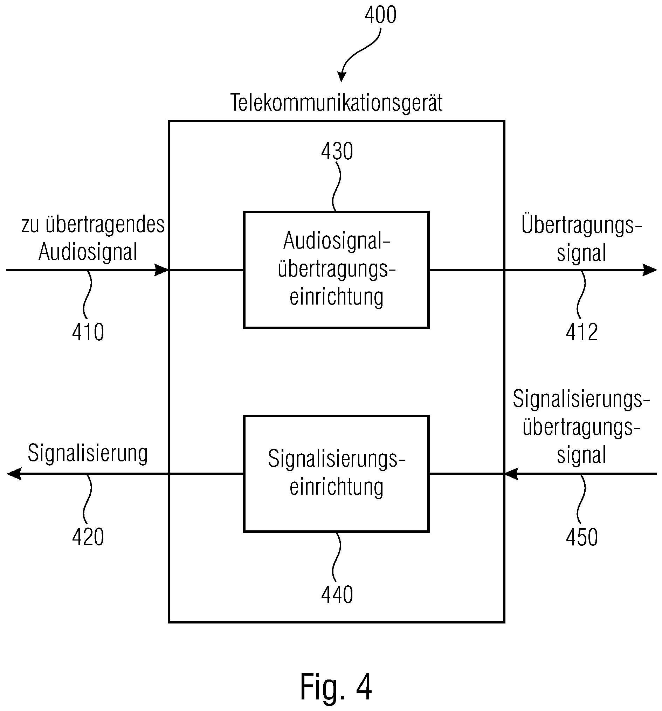

### 4. Ausführungsbeispiel gemäß Fig. 4

Fig. 4 zeigt ein Blockschaltbild eines Telekommunikationsgeräts gemäß einem weiteren Ausführungsbeispiel.

Das Telekommunikationsgerät 400 gemäß Fig. 4 ist ausgelegt, um ein zu übertragendes Audiosignal 410 zu empfangen und basierend darauf ein Übertragungssignal 412 zu erzeugen. Ferner ist das Telekommunikationsgerät 400 ausgelegt, um ein Signalisierungs-Übertragungssignal 450 von einem weiteren Telekommunikationsgerät zu empfangen. Im Übrigen ist das Telekommunikationsgerät 400 ausgelegt, um eine Signalisierung 420 gegenüber einem Benutzer des Telekommunikationsgeräts 400 auszugeben. Diesbezüglich ist anzumerken, dass das zu übertragende Audiosignal 410 den Audiosignalen 110, 210, 310 entspricht, so dass die obigen Ausführungen weiterhin gelten. Außerdem ist anzumerken, dass das Übertragungssignal 412 den oben bereits erläuterten Übertragungssignalen 112, 212, 312 entspricht.

Das Telekommunikationsgerät 400 umfasst ferner eine Audiosignalübertragungseinrichtung 430, die den oben erläuterten Audiosignalübertragungseinrichtungen 130, 230, 330 entspricht.

Das Telekommunikationsgerät 400 umfasst ferner eine Signalisierungseinrichtung 440, die ausgelegt ist, um das Signalisierungs-Übertragungssignal 450 von einem weiteren Telekommunikationsgerät zu empfangen und um basierend darauf die Signalisierung 420 auszugeben. Die Signalisierungseinrichtung 440 weist somit nicht notwendigerweise eine eigene Signalverarbeitung auf, sondern kann sich in einem einfachsten Fall auf die in dem Signalisierungs-Übertragungssignal 450 enthaltene Information verlassen. Das Signalisierungs-Übertragungssignal 450 umfasst dabei eine Information, die anzeigt, ob zu besorgen ist, dass das Audiosignal, das typischerweise in dem Übertragungssignal 412 enthalten ist, akustisch für Dritte verständlich ist, oder eine Störung für Dritte darstellt. Findet die Signalisierungseinrichtung 440 eine entsprechende Information in dem Signalisierungs-Übertragungssignal 450, so veranlasst die Signalisierungseinrichtung 440 eine Signalisierung 420. Zeigt das Signalisierungs-Übertragungssignal 450 hingegen an, dass nicht zu besorgen ist, dass das Audiosignal akustisch für Dritte verständlich ist, so deaktiviert die Signalisierungseinrichtung 440 die Signalisierung 420. Somit ist das Telekommunikationsgerät 400 ausgelegt, um mit einem "kooperativen" weiteren Telekommunikationsgerät zusammenzuarbeiten. Dabei verlässt sich das Telekommunikationsgerät 400 darauf, dass das weitere Telekommunikationsgerät (in der Fig. 4 nicht gezeigt) signalisiert, wenn zu besorgen ist, dass das von dem Telekommunikationsgerät 400 zu dem weiteren Telekommunikationsgerät übertragene Audiosignal für (typischerweise unbefugte) Dritte akustisch verständlich ist. Beispielsweise kann das weitere Telekommunikationsgerät eine entsprechende Signalisierung in das Signalisierungs-Übertragungssignal 450 einfügen, wenn das von dem Telekommunikationsgerät 400 übertragene Audiosignal durch eine Freisprecheinrichtung des weiteren Telekommunikationsgeräts ausgegeben wird (wobei die Ausgabe durch eine Freisprecheinrichtung typischerweise die Gefahr mit sich bringt, dass unbefugte Dritte mithören können).

Somit ist zu sagen, dass das Telekommunikationsgerät 400 beispielsweise die von einem weiteren Telekommunikationsgerät empfangenen Signale daraufhin untersucht, ob diese eine Signalisierung enthalten, die anzeigt, dass zu besorgen ist, dass das Audiosignal akustisch für Dritte verständlich ist und/oder eine Störung für Dritte darstellt. In anderen Worten, das Telekommunikationsgerät 400 kann die von dem weiteren Telekommunikationsgerät enthaltenen Signale bzw. Datennachrichten nach einer derart spezifizierten Information durchsuchen, und die Signalisierungseinrichtung 440 kann ansprechend auf das Vorhandensein der entsprechenden Signalisierungsinformationen die Signalisierung 420 ausgeben.

Somit wird es durch das Zusammenspiel des Telekommunikationsgeräts 400 mit einem entsprechend kooperativen weiteren Telekommunikationsgerät ermöglicht, den Benutzer auch auf Gefahren für die Vertraulichkeit des von ihm Gesagten hinzuweisen, wenn diese Vertraulichkeitsrisiken aufseiten des weiteren Telekommunikationsgeräts bestehen, weil beispielsweise bei dem weiteren Telekommunikationsgerät eine Lauthöreinrichtung bzw. eine Freisprecheinrichtung aktiviert ist.

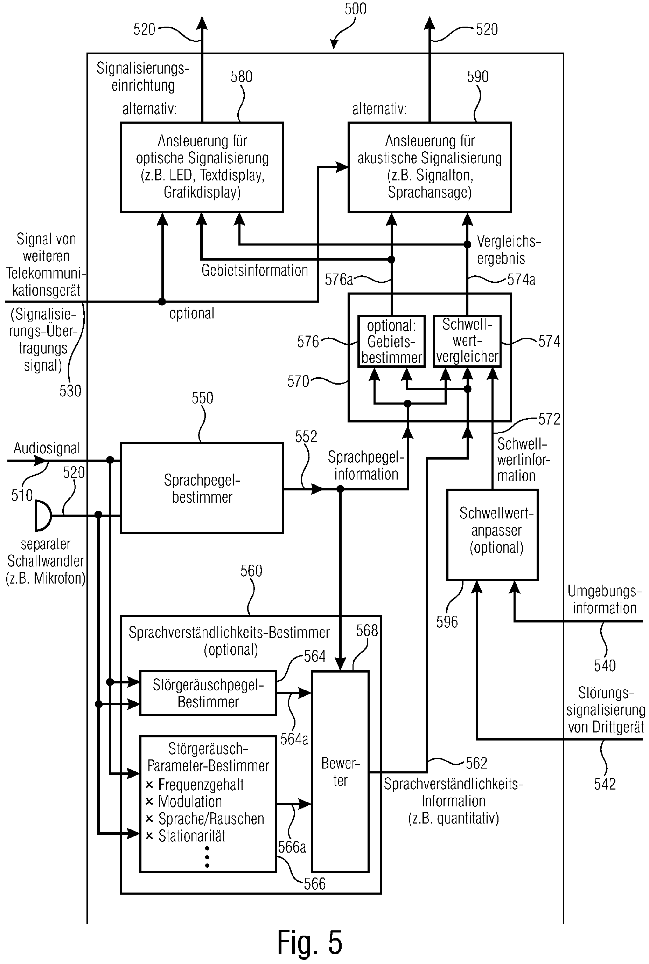

### 5. Signalisierungseinrichtung gemäß Fig. 5

Fig. 5 zeigt ein Blockschaltbild einer Signalisierungseinrichtung 500 gemäß einem Ausführungsbeispiel der vorliegenden Erfindung. Die Signalisierungseinrichtung 500 kann beispielsweise an die Stelle der Signalisierungseinrichtung 140, der Signalisierungseinrichtung 240, der Signalisierungseinrichtung 340 oder der Signalisierungseinrichtung 440 treten.

Diesbezüglich sei angemerkt, dass die Signalisierungseinrichtung 500 gemäß der Fig. 5 eine sehr umfangreiche Funktionalität aufweist. Insbesondere ist es allerdings auch möglich, dass die Signalisierungseinrichtung 500 nur eine Teilmenge der im Folgenden beschriebenen Funktionalitäten aufweist, wobei die Signalisierungseinrichtung 500 typischerweise ausgelegt ist, um eine Signalisierung auszugeben, wenn zu besorgen ist, dass das Audiosignal akustisch für Dritte verständlich ist und/oder eine Störung für Dritte darstellt. Die Art und Weise, wie durch die Signalisierungseinrichtung erkannt wird, dass zu besorgen ist, dass das Audiosignal akustisch für Dritte verständlich ist oder eine Störung für Dritte darstellt, kann allerdings in einem weiten Bereich variieren, wie im Folgenden anhand der Fig. 5 erläutert wird.

Die Signalisierungseinrichtung 500 ist typischerweise ausgelegt, um ein Audiosignal 510 zu empfangen, das beispielsweise den oben beschriebenen Audiosignalen 110, 210, 310, 410 entspricht. Weiterhin ist die Signalisierungseinrichtung ausgelegt, um eine Signalisierung 520 auszugeben, die signalisiert, dass zu besorgen ist, dass das Audiosignal akustisch für Dritte verständlich ist oder eine Störung für Dritte darstellt.

Zusätzlich zu dem Audiosignal 510 kann die Signalisierungseinrichtung bei einigen Ausführungsbeispielen ein weiteres Audiosignal 520 von einem separaten Schallwandler (z.B. Mikrofon) empfangen, wobei der separate Schallwandler typischerweise nicht Teil der Signalisierungseinrichtung 500 ist. Die Verwendung dieses zusätzlichen Audiosignals 520 ist dabei als optional anzusehen.

Die Signalisierungseinrichtung 500 kann ferner ausgelegt sein, um ein Signal 530 von einem weiteren Telekommunikationsgerät zu empfangen. Bei diesem Signal 530 kann es sich beispielsweise um ein Signalisierungs-Übertragungssignal handeln, das von dem weiteren Telekommunikationsgerät übertragen wird. Bei dem weiteren Telekommunikationsgerät handelt es sich typischerweise um ein Telekommunikationsgerät, mit dem das vorliegende Telekommunikationsgerät, das die Signalisierungseinrichtung umfasst, in einer Audiokommunikationsbeziehung steht. In anderen Worten, das Signalisierungs-Übertragungssignal 530 erhält die Signalisierungseinrichtung typischerweise von einem Gegenstellen-Audiokommunikationsgerät, mit dem das die Signalisierungseinrichtung 500 enthaltene Telekommunikationsgerät aktuell (also beispielsweise zu dem Zeitpunkt, zu dem das Signalisierungs-Übertragungssignal der Signalisierungseinrichtung 500 empfangen wird) in einer Telekommunikationsbeziehung steht.

Allerdings sei darauf hingewiesen, dass der Empfang und die Auswertung des Signalisierungs-Übertragungssignals 530 als optional anzusehen ist. Andererseits kann der Empfang und die Auswertung des Signalisierungs-Übertragungssignals 530 bei einigen sehr einfachen Ausführungsbeispielen den Empfang und die Auswertung des Audiosignals 510 bzw. des Audiosignals 520 ersetzen.

Die Signalisierungseinrichtung 500 ist ferner optional ausgelegt, um eine Umgebungsinformation 540 zu empfangen, die beispielsweise Charakteristika einer Umgebung, in der sich das die Signalisierungseinrichtung enthaltende Telekommunikationsgerät befindet, beschreibt. Die Umgebungsinformation kann beispielsweise durch einen in dem Telekommunikationsgerät enthaltenen Informationsbestimmer geliefert werden. Beispielsweise kann die Umgebungsinformation 540 erhalten werden, um zu signalisieren, dass in einer bestimmten Umgebung ein besonderes Ruhebedürfnis (definiert beispielsweise durch ein Ruhegebot) herrscht, oder dass in einer Umgebung ein Kommunikationsverbot (beispielsweise definiert als ein Telefonierverbot) besteht. Die Umgebungsinformation kann durch das Telekommunikationsgerät beispielsweise erhalten werden, indem Verbots- bzw. Gebotszeichen durch eine optische Auswerteeinheit ausgewertet werden. Alternativ dazu können beispielsweise elektronische Verbots- bzw. Gebotsinformationen (die beispielsweise durch eine drahtgebundene oder drahtlose Kommunikation von entsprechenden Nachrichten oder durch die Auswertung von RFID-Kennzeichnungen, beispielsweise durch eine Nahfeldkommunikation, signalisiert werden) ausgewertet werden. Alternativ dazu kann beispielsweise auch von einer durch das Telekommunikationsgerät bestimmten Positionsinformation auf bestimmte Gebote bzw. Verbote geschlossen werden. Somit kann beispielsweise in einem öffentlichen Verkehrsmittel, in einer Bildungseinrichtung oder in einem Krankenhaus eine entsprechende optische oder elektronische Signalisierung erfolgen, die von dem Telekommunikationsgerät ausgewertet wird und zur Bereitstellung einer entsprechenden Umgebungsinformation 540 verwendet wird.

Weiter optional kann die Signalisierungseinrichtung 520 ausgelegt sein, um eine Störungssignalisierung 542 von einem Drittgerät, das beispielsweise aktuell nicht in einer Audiokommunikationsbeziehung mit dem die Signalisierungseinrichtung enthaltenden Telekommunikationsgerät steht, zu empfangen. So kann ein Drittgerät, wie beispielsweise ein Handy, ein Laptop, ein Tablet-Computer oder ein anderes elektronisches Gerät an das die Signalisierungseinrichtung 500 enthaltende Telekommunikationsgerät eine Signalisierung senden, die anzeigt, dass ein besonderes Ruhebedürfnis besteht bzw. dass das Audiosignal, das von dem Telekommunikationsgerät oder von dessen Benutzer erzeugt wird, eine Störung für einen Dritten darstellt. Diese Störungssignalisierung 542 von einem Drittgerät kann beispielsweise durch ein optisches, elektrisches oder akustisches Signal bzw. durch eine optische, elektrische oder akustische Nachricht übertragen werden, wobei es in manchen Fällen nicht erforderlich ist, dass der Benutzer des Drittgeräts einen elektronischen Identifizierer des die Signalisierungseinrichtung enthaltenden Telekommunikationsgeräts kennt. Beispielsweise kann ein Benutzer eines Drittgeräts einen optischen Signalgeber (z.B. einen Infrarot-Sender oder einen Laser-Sender) ausrichten, um auf das "störende" Telekommunikationsgerät (das die Signalisierungseinrichtung umfasst) zu zeigen. Auf diese Art und Weise kann die Störungssignalisierung 542 von dem Drittgerät unmittelbar zu dem die Signalisierungseinrichtung 500 enthaltenden Telekommunikationsgerät gesendet werden. Alternativ dazu kann beispielsweise ein Netzwerkanbieter dabei mitwirken, die Störungssignalisierung 542 von dem Drittgerät zu dem die Signalisierungseinrichtung 500 enthaltenden Telekommunikationsgerät zu senden. Stellt beispielsweise der Benutzer des Drittgeräts fest, dass er an einem öffentlichen Ort durch andere Telefonierende gestört wird, so kann er dies mit einer entsprechenden Datennachricht dem für ihn zuständigen Netzbetreiber (z.B. Telekommunikationsanbieter) mitteilen, und der Netzbetreiber kann daraufhin eine Störungssignalisierung 542 zu allen Telekommunikationsgeräten senden, die sich in einer gewissen Umgebung des Telekommunikationsgeräts des gestörten Benutzers befinden. Zusammenfassend ist zu sagen, dass es viele verschiedene Wege gibt, um eine Störungssignalisierung 542 von einem Drittgerät zu dem die Signalisierungseinrichtung 500 enthaltenden Telekommunikationsgerät, bzw. zu der Signalisierungseinrichtung 500 selbst, zu senden.

Die von der Signalisierungseinrichtung 500 empfangenen Informationen (Audiosignal 510, zusätzliches Audiosignal 520, Signalisierungs-Übertragungssignal 530, Umgebungsinformation 540 und Störungssignalisierung 542 von einem Drittgerät) können von der Signalisierungseinrichtung ausgewertet werden, um basierend darauf eine aussagekräftige Signalisierung zu erzeugen, die anzeigt, wenn zu besorgen ist, dass das Audiosignal akustisch für Dritte verständlich ist oder eine Störung für Dritte darstellt.

Im Folgenden werden die verschiedenen funktionalen Einheiten beschrieben, die in verschiedenen Situationen bzw. abhängig von verschiedenen Eingangsinformationen die Signalisierung erzeugen.

Eine erste wichtige funktionale Einheit bildet hierbei die Sprachpegel-basierte Erzeugung der Signalisierung. Die Sprachpegel-basierte Funktionseinheit umfasst einen Sprachpegel-Bestimmer 550, einen optionalen Sprachverständlichkeits-Bestimmer 560 sowie eine Auswerteeinheit 570. Der Sprachpegel-Bestimmer 550 ist ausgelegt, um das Audiosignal 510 und/oder das zusätzliche Audiosignal 520 zu empfangen und basierend darauf eine Sprachpegel-Information 552 zu bestimmen. Beispielsweise kann der Sprachpegel-Bestimmer 550 die Sprachpegel-Information 552 derart liefern, dass die Sprachpegel-Information 552 ein Maß für eine akustische Lautstärke des Sprachsignals 510 und/oder des durch den separaten Schallwandler aufgenommenen zusätzlichen Sprachsignals 520 darstellt.

Der Sprachverständlichkeits-Bestimmer 560 kann zusätzlich zu dem Sprachpegel-Bestimmer 550 vorhanden sein. In einigen Ausführungsbeispielen kann der Sprachverständlichkeits-Bestimmer 560 aber auch an die Stelle des Sprachpegel-Bestimmers 550 treten, so dass der Sprachpegel-Bestimmer 550 nicht mehr benötigt wird. Der Sprachverständlichkeits-Bestimmer 560 ist ausgelegt, um das Audiosignal 510 und/oder das zusätzliche Audiosignal 520 von dem separaten Schallwandler zu empfangen und basierend darauf eine Sprachverständlichkeits-Information 562 zu erzeugen. Der Sprachverständlichkeits-Bestimmer kann beispielsweise einen Störgeräuschpegel-Bestimmer 564 und (optional) einen Störgeräusch-Parameter-Bestimmer 566 aufweisen. Der Störgeräuschpegel-Bestimmer 564 kann beispielsweise ausgelegt sein, um ein Signal-zu-Rauschverhältnis zu bestimmen (beispielsweise durch Trennung von Sprachsignal-Anteilen und Hintergrundgeräusch-Anteilen). Alternativ dazu kann der Störgeräuschpegel-Bestimmer 564 auch ausgelegt sein, um die Intensität (beispielsweise im Sinne einer Lautstärkeinformation) eines Hintergrundgeräuschs zu bestimmen. Diesbezüglich sind verschiedene Konzepte denkbar, die dem Fachmann bekannt sind. Insbesondere kann der Störgeräuschpegel-Bestimmer 564 bekannte Informationen über charakteristische Eigenschaften von Sprachsignalen ausnutzen, um Sprachsignalanteile von Hintergrundgeräuschsignalanteilen (die als Störgeräusch-Signalanteile angesehen werden können) zu trennen.

Somit liefert der Störgeräuschpegel-Bestimmer 564 eine Störgeräuschpegel-Information 564a. Der Störgeräusch-Parameter-Bestimmer 566 kann beispielsweise ausgelegt sein, um eine Störgeräusch-Parameter-Information 566a zu bestimmen, die beispielsweise eine Information über einen Frequenzgehalt eines Störgeräuschs, eine Information über eine Modulation des Störgeräuschs, oder eine Information über eine Stationarität des Störgeräuschs umfasst. Ferner kann die Störgeräusch-Parameter-Information 566a auch eine Information darüber enthalten, ob das Störgeräusch ein Sprachsignal (beispielsweise ein Sprachsignal eines entfernten anderen Sprechers, der von dem Benutzer des Telekommunikationsgeräts verschieden ist) oder ein allgemeines, rauschartiges Störgeräusch ist. Der Sprachverständlichkeits-Bestimmer 560 umfasst ferner beispielsweise einen Bewerter 568, der ausgelegt ist, um die Sprachverständlichkeitsinformation 562 auf der Basis der Sprachpegel-Information 552, der Störgeräuschpegel-Information 564a und gegebenenfalls zusätzlich der Störgeräusch-Parameter-Information 566a zu bestimmen. Beispielsweise kann der Bewerter 568 die verschiedenen Eingangsinformationen unterschiedlich bewerten, wobei lineare oder nichtlineare Zusammenhänge verwendet werden können. So kann der Bewerter 568 beispielsweise die Sprachpegel-Information 552 mit der Störgeräuschpegel-Information 564a vergleichen, ob somit herauszufinden, um wieviel der Sprachpegel eines "nahen Benutzers" des Telekommunikationsgeräts höher als ein Störpegel (der von der Sprache von entfernten Menschen und/oder von rauschartigen Hintergrundgeräuschen stammen kann) ist. Zeigt beispielsweise die Sprachpegel-Information 552 an, dass der Sprachpegel des Sprachsignals des "nahen Nutzers" nur geringfügig größer ist als ein durch die Störpegel-Information 564a beschriebener Störpegel, so kann die Sprachverständlichkeitsinformation 562 anzeigen, dass die Sprachverständlichkeit vergleichsweise schlecht ist bzw. einen niedrigen Wert aufweist. Ist hingegen der von der Sprachpegel-Information 552 beschriebene Sprachpegel eines nahen Nutzers deutlich größer als ein Störgeräuschpegel (beschrieben durch die Störgeräuschpegel-Information 564a) so kann die Sprachverständlichkeitsinformation 562 eine vergleichsweise hohe Sprachverständlichkeit anzeigen (bzw. einen vergleichsweise hohen Wert annehmen). Die optionale Störgeräusch-Parameter-Information 566a kann hierbei auch einen Einfluss haben. Liegt beispielsweise der Frequenzgehalt der Störgeräusche in einem Sprachfrequenzband, so kann dies zu einem vergleichsweise niedrigen Wert der Sprachverständlichkeitsinformation 562 führen. Ebenso kann beispielsweise die (von dem Störgeräusch-Parameter-Bestimmer festgestellte) Tatsache, dass ein Hintergrundgeräusch bzw. Störgeräusch sprach-artig ist (also beispielsweise Sprachsignale entfernter Dritter umfasst), zu einem verringerten Wert der Sprachverständlichkeitsinformation 562 führen.

Zusammenfassend ist somit festzuhalten, dass der Sprachverständlichkeits-Bestimmer 560 die Sprachverständlichkeitsinformation 562 derart bildet, dass diese ein quantitatives Maß dafür darstellt, wie gut die Sprache eines nahen Sprechers, der typischerweise der Benutzer des Telekommunikationsgeräts ist, in Anbetracht der Nebengeräusche verständlich ist. Dabei können sowohl Pegel als auch Eigenschaften der Sprachsignale und/oder der Nebengeräusche mit berücksichtigt werden.

Der Auswerter 570 ist beispielsweise ausgelegt, um die Sprachpegel-Information und/oder die Sprachverständlichkeitsinformation zu empfangen. Der Auswerter 570 kann ferner eine Schwellwertinformation 572 empfangen oder einen fest vorgegebenen Schwellwert verwenden. Der Auswerter 570 umfasst beispielsweise einen Schwellwertvergleicher 574, der ausgelegt ist, um die Sprachpegelinformation 552 und/oder die Sprachverständlichkeitsinformation 562 mit einem festen oder variablen Schwellwert (wobei letzter durch die Schwellwertinformation 572 beschrieben werden kann) zu vergleichen. Der Schwellwertvergleicher 574 liefert beispielsweise ein Vergleichsergebnis 574a, das abhängig davon ist, ob ein Wert der Sprachverständlichkeitsinformation 562 größer oder kleiner als ein fester oder variabler Schwellwert ist, oder das abhängig davon ist, ob ein Wert der Sprachpegel-Information 552 größer oder kleiner als ein fester oder variabler Schwellwert ist. Der Auswerter 570 umfasst ferner, optional, einen Gebietsbestimmer 576, der ausgelegt ist, um basierend auf der Sprachpegel-Information 552 und/oder basierend auf der Sprachverständlichkeitsinformation 562 eine Gebietsinformation 576a zu liefern, die anzeigt, innerhalb welchen Gebiets (bzw. innerhalb welchen Umkreises) ein Sprachsignal (z.B. das Sprachsignal des nahen Benutzers des Telekommunikationsgeräts) mit einer vorbestimmten Lautstärke oder Qualität (definiert beispielsweise durch ein Sprachsignal-zu-Hintergrundgeräusch-Lautstärke-Verhältnis) wahrnehmbar ist. Beispielsweise kann die Gebiets-Information anzeigen, dass das Sprachsignal (beispielsweise des nahen Benutzers) mit einer guten Sprachverständlichkeit (beispielsweise mit einem Signal-zu-Rauschverhältnis, das mindestens einem vorgegebenen Wert entspricht) im Umkreis von x Metern um das Telekommunikationsgerät herum (oder um einen anderen Bezugspunkt herum) verständlich ist.

Die Signalisierungseinrichtung 500 umfasst ferner eine Ansteuerung 580 für eine optische Signalisierung und/oder eine Ansteuerung 590 für eine akustische Signalisierung. Die Ansteuerung 580 für eine optische Signalisierung kann beispielsweise ausgelegt sein, um eine lichtemittierende Diode, ein Textdisplay oder ein Grafikdisplay abhängig von dem Vergleichsergebnis 574a anzusteuern, so dass beispielsweise eine Warnsignalisierung ausgegeben wird, wenn der Wert der Sprachpegelinformation 552 bzw. der Wert der Sprachverständlichkeitsinformation 562 größer als ein vorgegebener fester oder variabler Schwellwert ist. In ähnlicher Weise kann die Ansteuerung von 590 für die akustische Signalisierung einen akustischen Warnton (z.B. einen Signalton und/oder eine Sprachansage) veranlassen oder ausgeben, wenn der Wert der Sprachpegel-Information 552 bzw. der Wert der Sprachverständlichkeitsinformation 562 größer als der vorgegebene Schwellwert ist. Zusätzlich kann die Ansteuerung 580 für die optische Signalisierung bzw. die Ansteuerung 590 für die akustische Signalisierung die Gebiets-Information 576a berücksichtigen und somit beispielsweise anzeigen, dass die Sprachverständlichkeit für Dritte (mit einer bestimmten Qualität) in einem bestimmten Umkreis (zum Beispiel von x Metern) bzw. in einem bestimmten Gebiet um das Telekommunikationsgerät herum oder um den Benutzer des Telekommunikationsgeräts herum gegeben ist.

Somit kann die Signalisierung 520 beispielsweise basierend auf der SprachpegelInformation 552 und/oder der Sprachverständlichkeitsinformation 562 beliefert werden.

Im Folgenden werden weitere optionale Veränderungen bzw. Verbesserungen beschrieben.

Beispielsweise kann das oben erläuterte Signalisierungs-Übertragungssignal 530 unmittelbar der Ansteuerung 580 für die optische Signalisierung und/oder der Ansteuerung 590 für die akustische Signalisierung zugeführt werden. Somit kann die Signalisierungseinrichtung 500 das von dem weiteren Telekommunikationsgerät gelieferte Signalisierungs-Übertragungssignal 530 unmittelbar und ohne weitere Auswertungen dazu verwenden, um zu entscheiden, ob eine optische Signalisierung und/oder eine akustische Signalisierung 520 ausgegeben werden soll. Diese Vorgehensweise empfiehlt sich, um beispielsweise zu signalisieren, dass das Sprachsignal des Benutzers des Telekommunikationsgeräts auf der Seite eines entfernten weiteren Telekommunikationsgeräts für Dritte hörbar ist, beispielsweise aufgrund der Benutzung einer Freisprecheinrichtung auf Seiten des entfernten weiteren Telekommunikationsgeräts. Die Signalisierungseinrichtung kann somit basierend auf dem von dem weiteren Telekommunikationsgerät gelieferten Signalisierungs-Übertragungssignal 530 sehr effizient entscheiden, ob eine Signalisierung 520 erfolgen soll oder nicht.

Im Übrigen sei angemerkt, dass in sehr einfachen Ausführungsbeispielen die Verwendung des Signalisierungs-Übertragungssignals 530 die Verwendung der SprachpegelInformation 552 bzw. der Sprachverständlichkeitsinformation 562 vollständig ersetzen kann.

Die Signalisierungseinrichtung 500 umfasst ferner, optional, den Schwellwertanpasser 596. Der Schwellwertanpasser 596 ist beispielsweise ausgelegt, um die Umgebungsinformation 540 und/oder die Störungssignalisierung 542 von einem Drittgerät zu empfangen, und um die Schwellwertinformation 572, die dem Schwellwertvergleicher 574 zugeführt wird, abhängig davon anzupassen. Beispielsweise kann der Schwellwertanpasser 596 die Schwellwertinformation 572 senken (so dass der Schwellwertvergleicher 574 bereits bei einem niedrigeren Sprachverständlichkeitswert der Sprachverständlichkeitsinformation 562 ein Vergleichsergebnis 574 liefert, das eine Signalisierung 520 auslöst), wenn die Umgebungsinformation anzeigt, dass in einer bestimmten Umgebung eine vergleichsweise geringe Toleranz für Gespräche herrscht (was beispielsweise in einer Umgebung mit einem Ruhegebot oder mit einem Telefonierverbot der Fall sein kann). Mit anderen Worten, zeigt die Umgebungsinformation 540 an, dass ein Ruhegebot oder ein Telefonierverbot besteht, so erfolgt früher (also bei einem vergleichsweise niedrigen Wert der Sprachverständlichkeitsinformation) eine Signalisierung, dass eine Störung für Dritte zu besorgen ist. In ähnlicher Weise kann ein Wert der Schwellwertinformation 572 (im Vergleich zu einem normalen Wert der Schwellwertinformation) herabgesetzt werden, wenn eine Störungssignalisierung 542 von einem Drittgerät durch den Schwellwertanpasser 596 empfangen wird. Somit kann die Störungssignalisierung 542 von dem Drittgerät dazu führen, dass eine "Toleranzschwelle" des Schwellwertvergleichers herabgesetzt wird, wodurch ein Benutzer des Telekommunikationsgeräts bereits bei vergleichsweise niedrigem Sprachpegel oder bei vergleichsweise niedriger Sprachverständlichkeit auf eine zu besorgende Störung für Dritte hingewiesen wird. Somit kann ein potenziell gestörter Dritter durch Erzeugung einer Störungssignalisierung (mit seinem Drittgerät) veranlassen, dass der Benutzer des Telekommunikationsgeräts bereits bei leiserem Sprechen auf eine mögliche Störung des Dritten hingewiesen wird, wobei eine unter Umständen konfliktträchtige direkte Kommunikation zwischen dem Benutzer des Telekommunikationsgeräts und dem gestörten Dritten nicht erforderlich ist.

Zusammenfassend ist somit festzuhalten, dass die Signalisierungseinrichtung verschiedene Kriterien anwenden kann, um zu entscheiden, ob eine Signalisierung (sei es optisch oder akustisch) ausgegeben werden soll. In sehr einfachen Fällen kann entweder eine Lautstärke des Audiosignals 510 oder ein Signalisierungs-Übertragungssignal 530 verwendet werden, um zu entscheiden, ob eine Signalisierung (beispielsweise gegenüber dem Benutzer des die Signalisierungseinrichtung enthaltenden Telekommunikationsgeräts) ausgegeben werden soll oder nicht. Zusätzliche Details können aber auch ausgewertet werden, wie beispielsweise die Sprachverständlichkeit. Ferner kann auch die Umgebungssituation (über die Umgebungsinformation 540) oder eine Signalisierung von gestörten Dritten (über die Störungssignalisierung 542 von einem Drittgerät) mitberücksichtigt werden, um über die Signalisierung zu entscheiden.

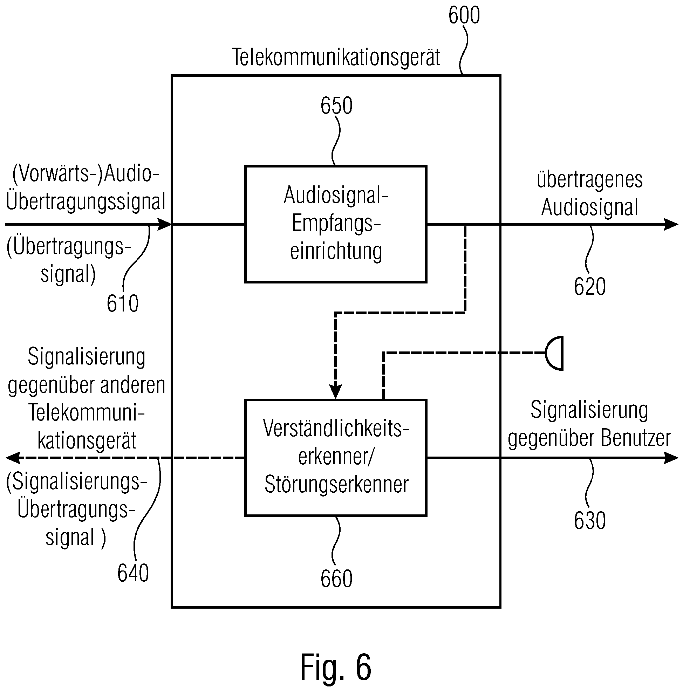

### 6. Ausführungsbeispiel gemäß Fig. 6

Fig. 6 zeigt Blockschaltbild eines Telekommunikationsgeräts gemäß einem weiteren Ausführungsbeispiel.

Das Telekommunikationsgerät 600 ist ausgelegt, um ein (Vorwärts-) Audio-Übertragungssignal 610 von einem anderen, entfernten Telekommunikationsgerät zu empfangen. Das Audio-Übertragungssignal 610 kann beispielsweise dem Übertragungssignal 112, 212, 312, 412 entsprechen, wie es oben erläutert wurde. Das Telekommunikationsgerät 600 ist ferner ausgelegt, um ein übertragenes Audiosignal 620 auszugeben. Das ausgegebene übertragene Audiosignal 620 kann beispielsweise im Wesentlichen (abgesehen von Verlusten bzw. Veränderungen durch die Übertragung) dem von dem anderen Telekommunikationsgerät aufgenommenen Audiosignal 110,210,310 entsprechen.

Das Telekommunikationsgerät ist ferner ausgelegt, um gegenüber dem Benutzer des Telekommunikationsgeräts 600 oder gegenüber dem anderen Telekommunikationsgerät eine Signalisierung 630, 640 auszugeben.

Das Telekommunikationsgerät 600 umfasst beispielsweise eine AudiosignalEmpfangseinrichtung 650, die ausgelegt ist, um ein Audiosignal (beispielsweise in Form des Audio-Übertragungssignals 610) von einem weiteren Telekommunikationsgerät (z.B. von dem "anderen" Telekommunikationsgerät) zu empfangen und akustisch auszugeben (z.B. als übertragenes Audiosignal 620).

Der Verständlichkeitserkenner/Störungserkenner 660, der auch als Signalisierungseinrichtung betrachtet werden kann, ist ausgelegt, um eine Signalisierung 630, 640 auszugeben, wenn zu besorgen ist, dass das ausgegebene Audiosignal akustisch für Dritte verständlich ist oder eine Störung für Dritte darstellt. Somit kann der Verständlichkeitserkenner/Störungserkenner 660 beispielsweise eine Information im Hinblick auf die Lautstärke des (akustisch ausgegebenen) übertragenen Audiosignals 620 erhalten. Alternativ oder zusätzlich kann der Verständlichkeitserkenner/Störungserkenner 660 eine Information darüber erhalten und verarbeiten, wie das übertragene Audiosignal ausgegeben wird. Beispielsweise kann der Verständlichkeitserkenner/Störungserkenner 660 eine Information darüber erhalten, wie das übertragene Audiosignal ausgegeben wird, ob also beispielsweise das übertragene Audiosignal über einen für einen einzigen Hörer optimierten Schallwandler oder über einen für mehrere Hörer optimierten Schallwandler ausgegeben wird. Erkennt beispielsweise der Verständlichkeitserkenner/Störungserkenner, dass das übertragene Audiosignal durch eine Freisprecheinrichtung oder Mithöreinrichtung ausgegeben wird, so kann dies eine Signalisierung hervorrufen, oder beispielsweise eine Lautstärkeschwelle, ab der eine Signalisierung ausgegeben wird, herabsetzen. Stellt der Verständlichkeitserkenner/Störungserkenner hingegen fest, dass das übertragene Audiosignal über einen Kopfhörer, oder über einen Handylautsprecher, der für eine direkte Schallausgabe an das Ohr des Handybenutzers optimiert ist, so kann eine Signalisierung unterdrückt werden, oder es kann die Lautstärkeschwelle, ab der eine Signalisierung erfolgt, vergleichsweise hoch gewählt werden. Insofern kann auch die Art und Charakteristik des Schallwandlers durch den Verständlichkeitserkenner/Störungserkenner bei der Entscheidung, ob eine Signalisierung erfolgen soll oder nicht, berücksichtigt werden. Im Übrigen ist festzuhalten, dass der Verständlichkeitserkenner/Störungserkenner 660 alternativ oder zusätzlich auch eine oder mehrere der Funktionalitäten der Signalisierungseinrichtung 500 aufweisen kann. Der Verständlichkeitserkenner/Störungserkenner 660 kann beispielsweise auch Informationen von einem separaten Schallwandler empfangen, der im Wesentlichen den anhand der Fig. 5 beschriebenen separaten Schallwandler 520 entspricht. So kann der Verständlichkeitserkenner/Störungserkenner 660 beispielsweise die Funktionalitäten des Sprachpegelbestimmers 550, des Sprachverständlichkeitsbestimmers 560, des Auswerters 570 und der Ansteuerungen 580, 590 für die optische bzw. akustische Signalisierung aufweisen. Auch ein Schwellwertanpasser 596 kann in dem Verständlichkeitserkenner/Störungserkenner 660 enthalten sein.

Weiterhin ist festzuhalten, dass die Signalisierung auf verschiedenen Wegen erfolgen kann. Beispielsweise kann die Signalisierung 630 gegenüber dem Benutzer des Telekommunikationsgeräts 600 erfolgen. Dabei können Signalisierungseinrichtungen eingesetzt werden, wie diese oben im Zusammenhang mit der Signalisierungseinrichtung 500 beschrieben wurden. In anderen Worten, die Signalisierung 630 kann beispielsweise der Signalisierung 520 entsprechen.

Alternativ dazu kann allerdings die Signalisierung auch als Signalisierung 640 gegenüber einem anderen Telekommunikationsgerät erfolgen. Dies ist besonders dann sinnvoll, wenn die Signalisierung 640 eine Information darüber trägt, dass zu besorgen ist, dass das Audiosignal akustisch für Dritte verständlich ist. Somit kann das Telekommunikationsgerät 600 beispielsweise gegenüber einem anderen Telekommunikationsgerät, von dem es das Audio-Übertragungssignal 610 empfängt, signalisieren, wenn das übertragene Audiosignal 620 derart ausgegeben wird, dass zu besorgen ist, dass es für (unbefugte) Dritte, die sich in der Nähe des Telekommunikationsgeräts 600 aufhalten, verständlich ist.

Auf der anderen Seite kann das Telekommunikationsgerät 600 auch gegenüber seinem eigenen Benutzer signalisieren, wenn zu besorgen ist, dass das akustisch ausgegebene übertragene Audiosignal 620 akustisch für Dritte verständlich ist und/oder eine Störung für Dritte darstellt.

In anderen Worten, das Telekommunikationsgerät mit dem Verständlichkeitserkenner/Störungserkenner kann entweder gegenüber dem anderen Telekommunikationsgerät, von dem es das Audio-Übertragungssignal 610 empfängt, oder gegenüber seinem eigenen Benutzer, oder gegenüber beiden eine entsprechende Signalisierung 630, 640 ausgeben, wenn zu besorgen ist, dass das übertragene Audiosignal akustisch für Dritte verständlich ist oder eine Störung für Dritte darstellt. Details, gegenüber wem die Signalisierung ausgegeben wird (Benutzer des Telekommunikationsgeräts 600; anderes Telekommunikationsgerät) variieren von Ausführungsbeispiel zu Ausführungsbeispiel, wie erläutert.

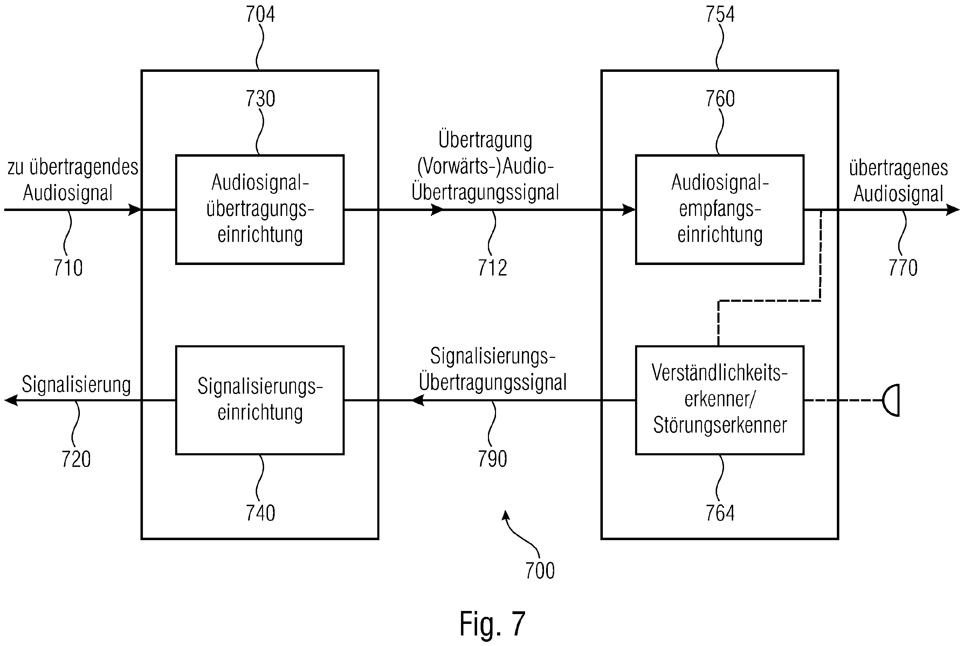

### 7. System gemäß Fig. 7

Fig. 7 zeigt ein Blockschaltbild eines Telekommunikationssystems, gemäß einem Ausführungsbeispiel der vorliegenden Erfindung.

Das Telekommunikationssystem 700 gemäß Fig. 7 umfasst ein erstes Telekommunikationsgerät 704 und ein zweites Telekommunikationsgerät 754. Das erste Telekommunikationsgerät 704 empfängt ein zu übertragendes Audiosignal 710 und erzeugt, basierend darauf, ein (Vorwärts-)Audio-Übertragungssignal 712, das zu einem zweiten Telekommunikationsgerät 754 übertragen wird. Das erste Telekommunikationsgerät 704 stellt ferner eine Signalisierung 720 gegenüber seinem Benutzer bereit bzw. gibt diese Signalisierung gegenüber seinem Benutzer (von dem beispielsweise das zu übertragende Audiosignal 710 im Wesentlichen stammt) aus.

Das zweite Telekommunikationsgerät 754 empfängt das (Vorwärts-) Audio-Übertragungssignal 712 (wobei die Übertragung von dem ersten Telekommunikationsgerät 704 zu dem zweiten Telekommunikationsgerät 754 über ein Kommunikationsnetz erfolgen kann, so dass ein oder mehrere Übertragungseinrichtungen, Vermittlungseinrichtungen, und Ähnliches zwischen das erste Telekommunikationsgerät 704 und das zweite Telekommunikationsgerät 754 geschaltet sind). Das zweite Telekommunikationsgerät 754 gibt ein übertragenes Audiosignal 770 (typischerweise in akustischer Form) gegenüber einem Benutzer aus. Ferner stellt das zweite Telekommunikationsgerät 754 ein Signalisierungs-Übertragungssignal 790 bereit, welches zu dem ersten Telekommunikationsgerät 704 übertragen wird (beispielsweise über das Kommunikationsnetzwerk).

Das erste Telekommunikationsgerät 704 umfasst beispielsweise eine Audiosignalübertragungseinrichtung 730, die ausgelegt ist, um das Audiosignal 710 von dem Benutzer zu empfangen und zu dem weiteren (zweiten) Telekommunikationsgerät 754 zu übertragen (beispielsweise in Form des (Vorwärts-) Audio-Übertragungssignals 712).

Das zweite Telekommunikationsgerät umfasst eine Audiosignalempfangseinrichtung 760, die ausgelegt ist, um das Audiosignal von dem ersten Telekommunikationsgerät 704 zu empfangen (beispielsweise in Form des Audio-Übertragungssignals 712), und akustisch auszugeben (beispielsweise in Form des übertragenen Audiosignals 770). Das zweite Telekommunikationsgerät 754 umfasst ferner eine Signalisierungseinrichtung 764, die ausgelegt ist, um ein Signalisierungssignal an das erste Telekommunikationsgerät auszugeben (z.B. das Signalisierungs-Übertragungssignal 790), wenn zu besorgen ist, dass das durch das zweite Telekommunikationsgerät ausgegebene Audiosignal 770 akustisch für Dritte verständlich ist oder eine Störung für Dritte darstellt. Das erste Telekommunikationsgerät 704 weist im Übrigen eine Signalisierungseinrichtung 740 auf, die ausgelegt ist, um ansprechend auf das von dem zweiten Telekommunikationsgerät 754 empfangene Signalisierungssignal (beispielsweise das Signalisierungs-Übertragungssignal 790) eine Signalisierung auszugeben, um gegenüber dem Benutzer des ersten Telekommunikationsgeräts 704 zu signalisieren, dass zu besorgen ist, dass das durch das zweite Telekommunikationsgerät 754 ausgegebene Audiosignal 770 akustisch für Dritte verständlich ist oder eine Störung für Dritte darstellt.

Das Telekommunikationssystem 700 ermöglicht somit durch das Zusammenwirken des ersten Telekommunikationsgeräts 704 und des zweiten Telekommunikationsgeräts 754, dass ein Benutzer des ersten Telekommunikationsgeräts durch die Signalisierung 720 informiert wird, wenn das aufseiten des (typischerweise entfernten) zweiten Telekommunikationsgeräts 754 akustisch ausgegebene übertragene Audiosignal 770 eine Störung für Dritte darstellt, oder wenn zu besorgen ist, dass das akustisch ausgegebene übertragene Audiosignal 770 für Dritte verständlich ist. Somit kann der Benutzer des ersten Telekommunikationsgeräts 704 sein Telefonierverhalten anpassen bzw. den Benutzer des zweiten Telekommunikationsgeräts 754 bitten, Störungen Dritter zu vermeiden oder auf die Vertraulichkeit des Telefonats mehr zu achten.

Im Übrigen sei darauf hingewiesen, dass das erste Telekommunikationsgerät 704 beispielsweise dem oben beschriebenen Telekommunikationsgerät 400 entsprechen kann. Das zweite Telekommunikationsgerät 754 kann beispielsweise dem oben beschriebenen Telekommunikationsgerät 600 entsprechen.

Die Funktionalitäten der oben beschriebenen Telekommunikationsgeräte 100, 200, 300 können aber ebenfalls in die Telekommunikationsgeräte 704, 754 integriert sein, um deren Funktionalität noch zu erweitern.

Somit ist festzuhalten, dass das System gemäß der Fig. 7 eine besonders gute Vertraulichkeit gewährleisten kann, indem ein Benutzer auch dann eine Signalisierung erhält, wenn an einem "entfernten Ende" einer Telekommunikationsverbindung ein Vertraulichkeitsproblem besteht.

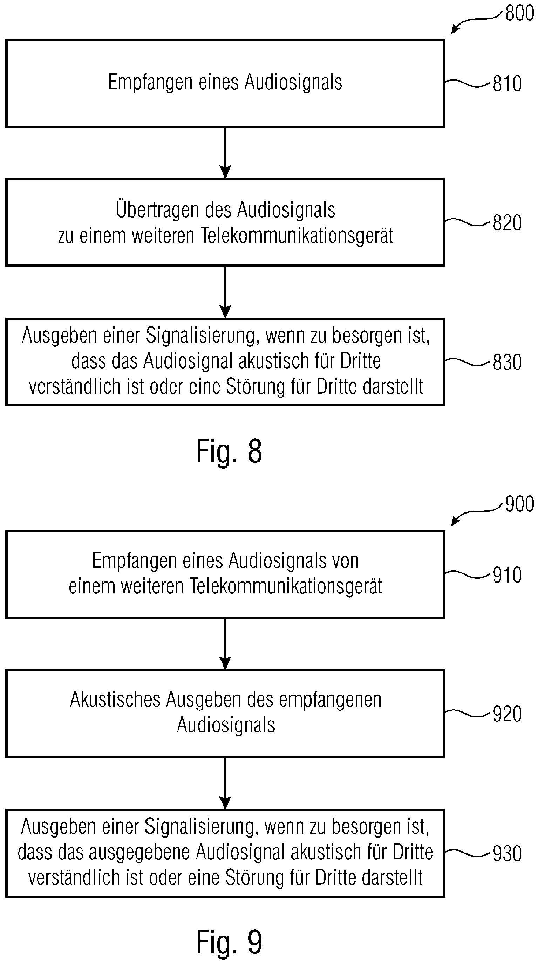

### 8. Verfahren gemäß Fig. 8

Fig. 8 zeigt ein Flussdiagramm eines Verfahrens gemäß einem Ausführungsbeispiel der vorliegenden Erfindung.

Das Verfahren 800 umfasst ein Empfangen 810 eines Audiosignals sowie ein Übertragen 820 des Audiosignal zu einem weiteren Telekommunikationsgerät. Das Verfahren 800 umfasst ferner ein Ausgeben 830 einer Signalisierung, wenn zu besorgen ist, dass das Audiosignal akustisch für Dritte verständlich ist oder eine Störung für Dritte darstellt.

Das hier beschriebene Verfahren basiert auf denselben Überlegungen wie die oben beschriebenen Vorrichtungen.

Das vorliegende Verfahren kann im Übrigen um alle Merkmale und Funktionalitäten ergänzt werden, die oben im Hinblick auf die erfindungsgemäßen Vorrichtungen beschrieben wurden.

### 9. Verfahren gemäß Fig. 9

Fig. 9 zeigt ein Flussdiagramm eines Verfahrens 900 zum Betrieb eines Telekommunikationsgeräts. Das Verfahren 900 umfasst ein Empfangen 910 eines Audiosignals von einem weiteren Telekommunikationsgerät. Das Verfahren 900 umfasst ferner ein akustisches Ausgeben 920 des empfangenen Audiosignals. Das Verfahren 900 umfasst ferner ein Ausgeben 930 einer Signalisierung, wenn zu besorgen ist, dass das ausgegebene Audiosignal akustisch für Dritte verständlich ist oder eine Störung für Dritte darstellt.

Das Verfahren 900 basiert auf denselben Überlegungen wie die oben beschriebenen Vorrichtungen. Das Verfahren 900 kann im Übrigen um alle Merkmale und Funktionalitäten, wie sie oben im Hinblick auf die erfindungsgemäßen Vorrichtungen beschrieben wurden, ergänzt werden.

### 10. Schlussfolgerung und weitere Aspekte

Im Folgenden werden noch einige Aspekte der oben erläuterten Methode bzw. des oben erläuterten Verfahrens zur Messung und Präsentation eines eigenen Sprachpegels bei der Telefonie beschrieben.

Ausführungsbeispiele der vorliegenden Erfindung basieren unter anderem auf der Erkenntnis, dass die mobile Telefonie es erlaubt, an beinah jedem Ort der Welt zu telefonieren. Es wurde erkannt, dass dies oft zum Leidwesen von Menschen in der Umgebung des Telefonierers erfolgt, die wohl oder übel den Redebeiträgen des Telefonierers folgen müssen. Es wurde erkannt, dass dies ganz besonders drastisch oder problematisch ist, wenn der Telefonierer besonders laut spricht. Beobachtungen haben ergeben, dass es oft gar nicht vom Telefonierer (beispielsweise von einem Benutzer eines Telekommunikationsgeräts) beabsichtigt ist, besonders laut zu sprechen. Es wurde aber erkannt, dass sich lautes Sprechen praktisch automatisch dann ergibt, wenn die Verbindung schlecht ist oder auf der Gegenseite (am fernen Ort, beispielsweise am Ort eines weiteren Telekommunikationsgeräts 754) sehr laute Nebengeräusche sind, die dann der Telefonierer (am nahen Ort, also beispielsweise am Ort seines Telekommunikationsgeräts 704) auszugleichen sucht, obgleich moderne Verfahren der Sprachübertragung einen solchen Pegelausgleich praktisch automatisch bei der Encodierung (zum Beispiel durch die Einrichtung 730) und Decodierung (zum Beispiel durch die Einrichtung 760) des Sprachsignals übernehmen.

Ein erster Aspekt der Erfindung besteht in einer Messung des durch den Telefonierer (z.B. durch den Benutzer des Telekommunikationsgeräts 100,200,300) verursachten Sprachpegels am nahen Ort (also an dem Ort, an dem sich der Telefonierer bzw. dessen Telekommunikationsgerät 100,200,300 befindet) und einer darauf beruhenden Darstellung des Pegels in geeigneter Weise, also z.B. auf einem Bildschirm des Mobiltelefons (also beispielweise des Telekommunikationsgeräts 100,200,300) etwa beim Telefonieren mit Sprechgarnitur (z.B. "Headset") oder auf einem am Gerät angeschlossenen Bildschirm, wie z.B. einer intelligenten Uhr (z.B. "Apple Smartwatch") oder durch Einspielen eines speziellen akustischen Signals (Audio-Hinweis oder "Audio-Icon"), welches besondere Lautstärke am nahen Ort indiziert.

Ein zweiter Aspekt der Erfindung ist wie der erste Aspekt, wobei aber alternativ eine Bestimmung der Sprachverständlichkeit (beispielsweise der Sprachverständlichkeitsinformation 562) beruhend auf verschiedenen Größen, die die Abhörsituation im nahen Raum beschreiben, also wenigstens Sprachpegel des Telefonierers (beispielsweise der Sprachpegelinformation 552), erfolgt. Mögliche aber nicht abschließende Erweiterungen hinsichtlich der erfassten Größen können aber auch sein Störpegel und -Frequenzgehalt sowie Beschaffenheit des Störgeräusches (Modulation, andere Sprecher, kontinuierliches Hintergrundrauschen, und andere) im nahen Raum, Nachhallzeit, und andere.

Ein dritter Aspekt der Erfindung ist wie der erste oder der zweite Aspekt, aber mit einer Visualisierung, wie sich der Sprachpegel oder die Sprachverständlichkeit in einer Umgebung verteilt (beispielsweise durch Anzeige der Gebietsinformation 576a). Dabei könnte beispielsweise gezeigt werden, dass die eigene Stimme zu 100 % noch in vier Metern Entfernung zu verstehen ist. Dies kann für einen Benutzer sehr beeindruckend sein, wenn dieser beispielsweise in einem öffentlichen Verkehrsmittel (z.B. in der Bahn) um sich schaut und feststellt, wer alles mithört bzw. mithören kann.

Ein vierter Aspekt der vorliegenden Erfindung ist wie der erste Aspekt oder der zweite Aspekt oder der dritte Aspekt, wobei allerdings die Stimmausgabe des fernen Sprechers (also beispielsweise eines Benutzers eines entfernten Telekommunikationsgeräts 400, das mit dem eigenen Telekommunikationsgerät 600 in einer Sprachverbindung steht) über den Lautsprecher (beispielsweise die Ausgabe des übertragenen Audiosignals 620) entweder beim normalen Telefonieren oder beim Freisprechen wie bei dem ersten Erfindungsaspekt, dem zweiten Erfindungsaspekt oder dem dritten Erfindungsaspekt erfasst, bestimmt und optisch oder akustisch dargestellt wird (beispielsweise über die Signalisierung 630 oder die Signalisierung 640).

Gemäß einem fünften Aspekt erfolgt die Darstellung des Ergebnisses, wie es in dem vierten Aspekt bestimmt wird, am fernen Ort (also beispielsweise bei einem entfernten Telekommunikationsgerät 400), so dass der Sprecher am fernen Ort (beispielsweise der Benutzer des entfernten Telekommunikationsgeräts 400, also beispielsweise des Telekommunikationsgeräts 400, das das Vorwärts-Übertragungssignal 610 liefert bzw. das das Signalisierungs-Übertragungssignal 640 empfängt) nachvollziehen kann, wie gut er von Dritten am nahen Ort (also beispielsweise am Ort des Telekommunikationsgeräts) zu verstehen ist.

Ein weiterer, sechster Aspekt der vorliegenden Erfindung ist wie einer der vorher beschriebenen Aspekte (Aspekte 1 bis 5), aber mit einer anderen Messgröße bzw. berechneten Größe, welche sodann veranschaulicht wird. Denkbar wäre hier z.B. ein "Ärgernis-Faktor" bzw. "Annoyance-Faktor", die direkt die bei dem ungewollten Zuhören erreichte "Verärgerung" ("Annoyance") abbildet. Beispielsweise könnte dieser Wert höher sein, wenn in einem Abteil telefoniert wird, in dem Telefonieren verboten ist (wobei beispielsweise die Umgebungs-Information 540 ausgewertet werden kann).

Einige oder alle Merkmale der oben beschriebenen Erfindungsaspekte können durch die hierin beschriebenen Telekommunikationsgeräte bzw. die zugehörigen Verfahren verwirklicht werden.

Weitere Anregungen für die tatsächliche Realisierung können beispielsweise der europäischen Patentanmeldung EP 2 247 082 A1 entnommen werden. Gemäß der vorliegenden Erfindung wird allerdings erreicht, dass ein Sprecher am fernen Ort vermeiden kann, das er von Dritten verstanden wird. Somit erfolgte bei Ausführungsbeispielen der Erfindung eine andere Form der Darstellung als dies herkömmlicherweise der Fall ist.

### 5. Implementierungsalternativen

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Im Folgenden werden weitere Ausführungsbeispiele und Anwendungsmöglichkeiten gemäß Aspekten der vorliegenden Erfindung beschrieben. Diese Aspekte können optional mit allen hierin beschriebenen Ausführungsbeispielen kombiniert werden.

Gemäß einem Aspekt der vorliegenden Erfindung wird eine Schätzung eines Sprachverstehens (durch einen Dritten) in der Nähe des Sprechers verwendet, beispielsweise um zu bestimmen oder zu entscheiden, ob zu besorgen ist, dass das Audiosignal akustisch für Dritte verständlich ist.

Ein weiteres mögliches Anwendungsszenario gemäß einem Aspekt der Erfindung ist wie folgt: Ein Benutzer führt ein vertrauliches Gespräch an einem Tisch mit einem Gesprächspartner. Der Benutzer legt dann auf den Tisch ein Gerät (beispielsweise ein Telekommunikationsgerät), welches sagt bzw. anzeigt oder signalisiert, ob das Gespräch durch einen Menschen (ohne technische Hilfsmittel) in der Nähe belauscht werden kann. Dieses Gerät kann gemäß einem Aspekt der Erfindung ein Telekommunikationsgerät sein, und kann beispielsweise eine (geschätzte) Sprachverständlichkeit auswerten (beispielsweise ein Signal-zu-Rausch-Verhältnis).

Im Folgenden werden zusätzliche Ausführungsbeispiele und Aspekte der Erfindung beschrieben, die einzeln oder in Kombination mit beliebigen der hierin beschriebenen Merkmale, Funktionalitäten und Einzelheiten verwendet werden können.

Ein erster Aspekt umfasst ein Telekommunikationsgerät (100;200;300;400;704) mit folgenden Merkmalen: einer Audiosignalübertragungseinrichtung (130;230;330;430;730), die ausgelegt ist, um ein Audiosignal (110;210;310;410;710) zu empfangen und zu einem weiteren Telekommunikationsgerät (600;754) zu übertragen; und einer Signalisierungseinrichtung (140;240;340;440;500;740), die ausgelegt ist, um eine Signalisierung (120;220;320;420;520;720) auszugeben, wenn zu besorgen ist, dass das Audiosignal (110;210;310;410;620;710;770) akustisch für Dritte verständlich ist oder eine Störung für Dritte darstellt.

Gemäß einem zweiten Aspekt unter Bezugnahme auf den ersten Aspekt ist die Signalisierungseinrichtung ausgelegt, zu bestimmen oder abzuschätzen, ob zu besorgen ist, dass das Audiosignal für einen Dritten, der sich in einer Umgebung des Telekommunikationsgeräts (100;200;300;400;704) befindet, und der von einem Benutzer des Telekommunikationsgeräts verschieden ist, akustisch verständlich ist, und um die Signalisierung abhängig davon auszugeben.

Gemäß einem dritten Aspekt unter Bezugnahme auf den ersten oder zweiten Aspekt ist die Signalisierungseinrichtung (440;500) ausgelegt, um eine Information (542; 790) darüber zu erhalten, ob zu besorgen ist, dass das Audiosignal (410; 620; 770) für einen Dritten, der sich in einer Umgebung des weiteren Telekommunikationsgeräts (600;754) befindet, und der von einem Benutzer des weiteren Telekommunikationsgeräts verschieden ist, akustisch verständlich ist, und um die Signalisierung (420;720) abhängig davon auszugeben.

Gemäß einem vierten Aspekt unter Bezugnahme auf den ersten bis dritten Aspekt ist die Signalisierungseinrichtung ausgelegt, zu bestimmen oder abzuschätzen, ob zu besorgen ist, dass das Audiosignal für einen Dritten, der sich in einer Umgebung des Telekommunikationsgeräts (100;200;300;400;704) befindet, aber der von dem Telekommunikationsgerät mehr als einen vorgegebenen Abstand aufweist, verständlich ist.

Gemäß einem fünften Aspekt unter Bezugnahme auf den ersten bis vierten Aspekt ist die Signalisierungseinrichtung ausgelegt, um das empfangene Audiosignal (110;210;310;510) auszuwerten, um zu bestimmen oder abzuschätzen, ob zu besorgen ist, dass das Audiosignal (110;210;310;510) für einen Dritten, der sich in einer Umgebung des Telekommunikationsgeräts (100;200;300;704) befindet, und der von einem Benutzer des Telekommunikationsgeräts verschieden ist, akustisch verständlich ist, und/oder die Signalisierungseinrichtung ist ausgelegt, um ein Signal von einem separaten Schallwandler (520) auszuwerten, um zu bestimmen oder abzuschätzen, ob zu besorgen ist, dass das Audiosignal für einen Dritten, der sich in einer Umgebung des Telekommunikationsgeräts befindet, und der von einem Benutzer des Telekommunikationsgeräts verschieden ist, akustisch verständlich ist.

Gemäß einem sechsten Aspekt unter Bezugnahme auf den ersten bis fünften Aspekt ist das Telekommunikationsgerät ausgelegt, um ein Signal (450; 530; 790) von dem weiteren Telekommunikationsgerät (600; 754) zu empfangen, das anzeigt, ob zu besorgen ist, dass das Audiosignal (410; 510; 620; 770) nach Ausgabe durch einen Schallwandler des weiteren Telekommunikationsgeräts (600; 754) für einen Dritten, der sich in einer Umgebung des weiteren Telekommunikationsgeräts befindet, und der von einem Benutzer des weiteren Telekommunikationsgeräts verschieden ist, akustisch verständlich ist.

Gemäß einem siebten Aspekt unter Bezugnahme auf den ersten bis sechsten Aspekt ist die Signalisierungseinrichtung (130;230;330; 500;740) ausgelegt, um die Signalisierung abhängig von einem Sprachpegel eines Benutzers des Telekommunikationsgeräts (100;200;300;704) auszugeben.

Gemäß einem achten Aspekt unter Bezugnahme auf den ersten bis siebten Aspekt ist die Signalisierungsreinrichtung (130;230;330;500;740) ausgelegt, um die Signalisierung abhängig von einer akustischen Lautstärke des Audiosignals an einem Ort des Telekommunikationsgeräts und/oder abhängig von einem elektrischen oder digitalisierten Signalpegel des empfangenen Audiosignals (110;210;310;710) auszugeben.

Gemäß einem neunten Aspekt unter Bezugnahme auf den ersten bis achten Aspekt ist die Signalisierungseinrichtung (130;230;330;500;740) ausgelegt, um eine Sprachverständlichkeit eines von einem Benutzer des Telekommunikationsgeräts (100;200;300;704) erzeugten Sprachsignals für einen Dritten, der sich in einer Umgebung des Telekommunikationsgeräts befindet, zu bestimmen oder abzuschätzen, und wobei die Signalisierungseinrichtung ausgelegt ist, um die Signalisierung abhängig davon auszugeben.

Gemäß einem zehnten Aspekt unter Bezugnahme auf den neunten Aspekt ist die Signalisierungseinrichtung (130;230;330;500;740) ausgelegt, um eine akustische Umgebung des Telekommunikationsgeräts bei einer Bestimmung oder Berechnung (560) der Sprachverständlichkeit zu berücksichtigen.

Gemäß einem elften Aspekt unter Bezugnahme auf den zehnten Aspekt ist die Signalisierungseinrichtung (130;230;330;500;740) ausgelegt, um einen Störgeräuschpegel und/oder einen Störgeräuschfrequenzgehalt und/oder eine Störgeräuschmodulation und/oder eine Störgeräusch-Rauschhaftigkeit und/oder eine Nachhallzeit bei der Bestimmung oder Berechnung (560) der Sprachverständlichkeit zu berücksichtigen.

Gemäß einem zwölften Aspekt unter Bezugnahme auf den ersten bis elften Aspekt ist die Signalisierungseinrichtung (130;230;330;340;500;740) ausgelegt, um eine Information (576a) über eine Größe eines Gebiets, in dem zu besorgen ist, dass das Audiosignal akustisch für Dritte verständlich ist, zu bestimmen und auszugeben.

Gemäß einem dreizehnten Aspekt unter Bezugnahme auf den ersten bis zwölften Aspekt ist die Signalisierungseinrichtung ausgelegt, um ein Maß für eine Störung Dritter durch das Audiosignal zu bestimmen und auszugeben.

Gemäß einem vierzehnten Aspekt unter Bezugnahme auf den dreizehnten Aspekt ist das Telekommunikationsgerät ausgelegt, um akustische Eigenschaften der Umgebung des Telekommunikationsgeräts und/oder Nutzungsvorgaben in der Umgebung des Telekommunikationsgeräts zu erfassen und um das Maß für die Störung Dritter in Abhängigkeit davon zu bestimmen.

Gemäß einem fünfzehnten Aspekt unter Bezugnahme auf den ersten bis vierzehnten Aspekt ist das Telekommunikationsgerät ausgelegt, um eine Störungs-Signalisierung (542) von einem Drittgerät, das von dem weiteren Telekommunikationsgerät (600;754) verschieden ist, zu empfangen, und wobei die Signalisierungseinrichtung ausgelegt ist, um eine Auswertung, ob zu besorgen ist, dass das Audiosignal akustisch für Dritte verständlich ist oder eine Störung für Dritte darstellt, abhängig von der Störungs-Signalisierung auszulösen, oder um die Störungs-Signalisierung bei der Auswertung zu berücksichtigen.

Ein sechzehnter Aspekt umfasst ein Telekommunikationsgerät (600; 754) mit folgenden Merkmalen: einer Audiosignalempfangseinrichtung (650;760), die ausgelegt ist, um ein Audiosignal von einem weiteren Telekommunikationsgerät (100;200;300;400;704) zu empfangen und akustisch auszugeben; und einer Signalisierungseinrichtung (660;764), die ausgelegt ist, um eine Signalisierung (420;530;630;640;790) auszugeben, wenn zu besorgen ist, dass das ausgegebene Audiosignal (620;770) akustisch für Dritte verständlich ist oder eine Störung für Dritte darstellt.

Gemäß einem siebzehnten Aspekt unter Bezugnahme auf den sechzehnten Aspekt ist die Signalisierungseinrichtung (660;764) ausgelegt, zu bestimmen oder abzuschätzen, ob zu besorgen ist, dass das Audiosignal (620;770) für einen Dritten, der sich in einer Umgebung des Telekommunikationsgeräts befindet, und der von einem Benutzer des Telekommunikationsgeräts verschieden ist, akustisch verständlich ist, und um die Signalisierung (420;530;630;640;790) abhängig davon auszugeben.

Gemäß einem achtzehnten Aspekt unter Bezugnahme auf den sechzehnten bis siebzehnten Aspekt ist die Signalisierungseinrichtung (660;764) ausgelegt, zu bestimmen oder abzuschätzen, ob zu besorgen ist, dass das Audiosignal (620;770) für einen Dritten, der sich in einer Umgebung des Telekommunikationsgeräts befindet, aber der von dem Telekommunikationsgerät mehr als einen vorgegebenen Abstand aufweist, verständlich ist.

Gemäß einem neunzehnten Aspekt unter Bezugnahme auf den sechzehnten bis achtzehnten Aspekt ist die Signalisierungseinrichtung (660;764) ausgelegt, um die Signalisierung abhängig von einer Lautstärke, mit der das Audiosignal (620;770) akustisch ausgegeben wird, zu bestimmen.

Gemäß einem zwanzigsten Aspekt unter Bezugnahme auf den sechzehnten bis neunzehnten Aspekt ist die Signalisierungseinrichtung (660;764) ausgelegt, um die Signalisierung abhängig davon zu bestimmen, ob das Audiosignal (620;770) über einen für eine direkte Wiedergabe für einen einzelnen Benutzer bestimmten Schallwandler oder über einen für eine entfernte Wiedergabe an einen oder mehrere Benutzer bestimmten Schallwandler ausgegeben wird.

Gemäß einem einundzwanzigsten Aspekt unter Bezugnahme auf den sechzehnten bis zwanzigsten Aspekt ist die Signalisierungseinrichtung (660;764) ausgelegt, um eine Sprachverständlichkeit eines von einem Schallwandler des Telekommunikationsgeräts (600;754) erzeugten Sprachsignals für einen Dritten, der sich in einer Umgebung des Telekommunikationsgeräts befindet, zu bestimmen oder abzuschätzen, und wobei die Signalisierungseinrichtung ausgelegt ist, um die Signalisierung abhängig davon auszugeben.

Gemäß einem zweiundzwanzigsten Aspekt unter Bezugnahme auf den sechzehnten bis einundzwanzigsten Aspekt ist das Telekommunikationsgerät ausgelegt, um die Signalisierung (640) über einen Übertragungsweg an das weitere Telekommunikationsgerät (100;200;300;400;704) zu senden.

Ein dreiundzwanzigster Aspekt umfasst ein Telekommunikationssystem (700) zum Übertragen eines Audiosignals (710) von einem ersten Telekommunikationsgerät (400;704) zu einem zweiten Telekommunikationsgerät (600;754), mit folgenden Merkmalen: einem ersten Telekommunikationsgerät (400;704) mit einer Audiosignalübertragungseinrichtung (440;730), die ausgelegt ist, um ein Audiosignal (410;710) von einem Benutzer zu empfangen und zu einem zweiten Telekommunikationsgerät (600;754) zu übertragen; und einem zweiten Telekommunikationsgerät (600;754) mit einer Audiosignalempfangseinrichtung (650;760), die ausgelegt ist, um ein Audiosignal von dem ersten Telekommunikationsgerät zu empfangen und akustisch auszugeben, und einer Signalisierungseinrichtung (660;764), die ausgelegt ist, um ein Signalisierungssignal (640;790) an das erste Telekommunikationsgerät auszugeben, wenn zu besorgen ist, dass das durch das zweite Telekommunikationsgerät ausgegebene Audiosignal akustisch für Dritte verständlich ist oder eine Störung für Dritte darstellt; wobei das erste Telekommunikationsgerät eine Signalisierungseinrichtung (440;740) aufweist, die ausgelegt ist, um ansprechend auf ein von dem zweiten Telekommunikationsgerät empfangenes Signalisierungssignal (450;640;790) eine Signalisierung (420;720) auszugeben, um gegenüber einem Benutzer des ersten Telekommunikationsgeräts zu signalisieren, dass zu besorgen ist, dass das durch das zweite Telekommunikationsgerät ausgegebene Audiosignal (620;770) akustisch für Dritte verständlich ist oder eine Störung für Dritte darstellt.

Ein vierundzwanzigster Aspekt umfasst ein Verfahren (800) zum Betrieb eines Telekommunikationsgeräts, mit folgenden Schritten: Empfangen (810) eines Audiosignals; Übertragen (820) des Audiosignals zu einem weiteren Telekommunikationsgerät; und Ausgeben (830) einer Signalisierung, wenn zu besorgen ist, dass das Audiosignal akustisch für Dritte verständlich ist oder eine Störung für Dritte darstellt.

Ein fünfundzwanzigster Aspekt umfasst ein Verfahren (900) zum Betrieb eines Telekommunikationsgeräts, mit folgenden Schritten: Empfangen (910) eines Audiosignals von einem weiteren Telekommunikationsgerät; akustisches Ausgeben (920) des empfangenen Audiosignals; und Ausgeben (930) einer Signalisierung, wenn zu besorgen ist, dass das ausgegebene Audiosignal akustisch für Dritte verständlich ist oder eine Störung für Dritte darstellt.

Ein sechsundzwanzigster Aspekt umfasst ein Computerprogramm zur Durchführung des Verfahrens gemäß dem vierundzwanzigsten oder fünfundzwanzigsten Aspekt wenn das Computerprogramm ausgeführt wird.

Ein siebenundzwanzigster Aspekt umfasst ein Telekommunikationsgerät (100;200;300;400;704) mit folgenden Merkmalen: einer Audiosignalübertragungseinrichtung (130;230;330;430;730), die ausgelegt ist, um ein Audiosignal (110;210;310;410;710) zu empfangen und zu einem weiteren Telekommunikationsgerät (600;754) zu übertragen; und einer Signalisierungseinrichtung (140;240;340;440;500;740), die ausgelegt ist, um eine Signalisierung (120;220;320;420;520;720) auszugeben, wenn zu besorgen ist, dass das Audiosignal (110;210;310;410;620;710;770) akustisch für Dritte verständlich ist oder eine Störung für Dritte darstellt; wobei die Signalisierungseinrichtung ausgelegt ist, um das empfangene Audiosignal (110;210;310;510) auszuwerten, um zu bestimmen oder abzuschätzen, ob zu besorgen ist, dass das Audiosignal (110;210;310;510) für einen Dritten, der sich in einer Umgebung des Telekommunikationsgeräts (100;200;300;704) befindet, und der von einem Benutzer des Telekommunikationsgeräts verschieden ist, akustisch verständlich ist, wobei die Signalisierungseinrichtung ausgelegt ist, um ein Signal von einem separaten Schallwandler (520) auszuwerten, um zu bestimmen oder abzuschätzen, ob zu besorgen ist, dass das Audiosignal für einen Dritten, der sich in einer Umgebung des Telekommunikationsgeräts befindet, und der von einem Benutzer des Telekommunikationsgeräts verschieden ist, akustisch verständlich ist.

Ein achtundzwanzigster Aspekt umfasst ein Telekommunikationsgerät (100;200;300;400;704) mit folgenden Merkmalen: einer Audiosignalübertragungseinrichtung (130;230;330;430;730), die ausgelegt ist, um ein Audiosignal (110;210;310;410;710) zu empfangen und zu einem weiteren Telekommunikationsgerät (600;754) zu übertragen; und einer Signalisierungseinrichtung (140;240;340;440;500;740), die ausgelegt ist, um eine Signalisierung (120;220;320;420;520;720) auszugeben, wenn zu besorgen ist, dass das Audiosignal (110;210;310;410;620;710;770) akustisch für Dritte verständlich ist oder eine Störung für Dritte darstellt; wobei das Telekommunikationsgerät ausgelegt ist, um ein Signal (450; 530; 790) von dem weiteren Telekommunikationsgerät (600; 754) zu empfangen, das anzeigt, ob zu besorgen ist, dass das Audiosignal (410; 510; 620; 770) nach Ausgabe durch einen Schallwandler des weiteren Telekommunikationsgeräts (600; 754) für einen Dritten, der sich in einer Umgebung des weiteren Telekommunikationsgeräts befindet, und der von einem Benutzer des weiteren Telekommunikationsgeräts verschieden ist, akustisch verständlich ist.

Ein neunundzwanzigster Aspekt umfasst ein Telekommunikationsgerät (100;200;300;400;704) mit folgenden Merkmalen: einer Audiosignalübertragungseinrichtung (130;230;330;430;730), die ausgelegt ist, um ein Audiosignal (110;210;310;410;710) zu empfangen und zu einem weiteren Telekommunikationsgerät (600;754) zu übertragen; und einer Signalisierungseinrichtung (140;240;340;440;500;740), die ausgelegt ist, um eine Signalisierung (120;220;320;420;520;720) auszugeben, wenn zu besorgen ist, dass das Audiosignal (110;210;310;410;620;710;770) akustisch für Dritte verständlich ist oder eine Störung für Dritte darstellt; wobei die Signalisierungseinrichtung (130;230;330;500;740) ausgelegt ist, um eine Sprachverständlichkeit eines von einem Benutzer des Telekommunikationsgeräts (100;200;300;704) erzeugten Sprachsignals für einen Dritten, der sich in einer Umgebung des Telekommunikationsgeräts befindet, zu bestimmen oder abzuschätzen, und wobei die Signalisierungseinrichtung ausgelegt ist, um die Signalisierung abhängig davon auszugeben; wobei die Signalisierungseinrichtung (130;230;330;500;740) ausgelegt ist, um eine akustische Umgebung des Telekommunikationsgeräts bei einer Bestimmung oder Berechnung (560) der Sprachverständlichkeit zu berücksichtigen.

Ein dreißigster Aspekt umfasst ein Telekommunikationsgerät (100;200;300;400;704) mit folgenden Merkmalen: einer Audiosignalübertragungseinrichtung (130;230;330;430;730), die ausgelegt ist, um ein Audiosignal (110;210;310;410;710) zu empfangen und zu einem weiteren Telekommunikationsgerät (600;754) zu übertragen; und einer Signalisierungseinrichtung (140;240;340;440;500;740), die ausgelegt ist, um eine Signalisierung (120;220;320;420;520;720) auszugeben, wenn zu besorgen ist, dass das Audiosignal (110;210;310;410;620;710;770) akustisch für Dritte verständlich ist oder eine Störung für Dritte darstellt; wobei die Signalisierungseinrichtung (130;230;330;340;500;740) ausgelegt ist, um eine Information (576a) über eine Größe eines Gebiets, in dem zu besorgen ist, dass das Audiosignal akustisch für Dritte verständlich ist, zu bestimmen und auszugeben.

Ein einunddreißigster Aspekt umfasst ein Telekommunikationsgerät (100;200;300;400;704) mit folgenden Merkmalen: einer Audiosignalübertragungseinrichtung (130;230;330;430;730), die ausgelegt ist, um ein Audiosignal (110;210;310;410;710) zu empfangen und zu einem weiteren Telekommunikationsgerät (600;754) zu übertragen; und einer Signalisierungseinrichtung (140;240;340;440;500;740), die ausgelegt ist, um eine Signalisierung (120;220;320;420;520;720) auszugeben, wenn zu besorgen ist, dass das Audiosignal (110;210;310;410;620;710;770) akustisch für Dritte verständlich ist oder eine Störung für Dritte darstellt; wobei die Signalisierungseinrichtung ausgelegt ist, um ein Maß für eine Störung Dritter durch das Audiosignal zu bestimmen und auszugeben.

Ein zweiunddreißigster Aspekt umfasst ein Telekommunikationsgerät (100;200;300;400;704) mit folgenden Merkmalen: einer Audiosignalübertragungseinrichtung (130;230;330;430;730), die ausgelegt ist, um ein Audiosignal (110;210;310;410;710) zu empfangen und zu einem weiteren Telekommunikationsgerät (600;754) zu übertragen; und einer Signalisierungseinrichtung (140;240;340;440;500;740), die ausgelegt ist, um eine Signalisierung (120;220;320;420;520;720) auszugeben, wenn zu besorgen ist, dass das Audiosignal (110;210;310;410;620;710;770) akustisch für Dritte verständlich ist oder eine Störung für Dritte darstellt; wobei das Telekommunikationsgerät ausgelegt ist, um eine Störungs-Signalisierung (542) von einem Drittgerät, das von dem weiteren Telekommunikationsgerät (600;754) verschieden ist, zu empfangen, und wobei die Signalisierungseinrichtung ausgelegt ist, um eine Auswertung, ob zu besorgen ist, dass das Audiosignal akustisch für Dritte verständlich ist oder eine Störung für Dritte darstellt, abhängig von der Störungs-Signalisierung auszulösen, oder um die Störungs-Signalisierung bei der Auswertung zu berücksichtigen.

Ein dreiunddreißigster Aspekt umfasst ein Telekommunikationsgerät (100;200;300;400;704) mit folgenden Merkmalen: einer Audiosignalübertragungseinrichtung (130;230;330;430;730), die ausgelegt ist, um ein Audiosignal (110;210;310;410;710) zu empfangen und zu einem weiteren Telekommunikationsgerät (600;754) zu übertragen; und einer Signalisierungseinrichtung (140;240;340;440;500;740), die ausgelegt ist, um eine Sprachverständlichkeit eines von einem Benutzer des Telekommunikationsgeräts (100;200;300;704) erzeugten Sprachsignals für einen Dritten, der sich in einer Umgebung des Telekommunikationsgeräts befindet, abzuschätzen, und wobei die Signalisierungseinrichtung ausgelegt ist, um eine Signalisierung abhängig davon auszugeben; wobei die Signalisierungseinrichtung (130;230;330;500;740) ausgelegt ist, um eine akustische Umgebung des Telekommunikationsgeräts bei einer Abschätzung (560) der Sprachverständlichkeit zu berücksichtigen; wobei die Signalisierungseinrichtung (130;230;330;500;740) ausgelegt ist, um eine Störgeräuschmodulation und/oder eine Störgeräusch-Rauschhaftigkeit und/oder eine Nachhallzeit bei der Abschätzung (560) der Sprachverständlichkeit zu berücksichtigen.

Gemäß einem vierunddreißigsten Aspekt unter Bezugnahme auf den dreiunddreißigsten Aspekt ist die Signalisierungseinrichtung ausgelegt, um das empfangene Audiosignal (110;210;310;510) auszuwerten, um abzuschätzen, ob das Audiosignal (110;210;310;510) für einen Dritten, der sich in einer Umgebung des Telekommunikationsgeräts (100;200;300;704) befindet, und der von einem Benutzer des Telekommunikationsgeräts verschieden ist, akustisch verständlich ist, und/oder die Signalisierungseinrichtung ist ausgelegt, um ein Signal von einem separaten Schallwandler (520) auszuwerten, um abzuschätzen, ob das Audiosignal für einen Dritten, der sich in einer Umgebung des Telekommunikationsgeräts befindet, und der von einem Benutzer des Telekommunikationsgeräts verschieden ist, akustisch verständlich ist.

Gemäß einem fünfunddreißigsten Aspekt unter Bezugnahme auf den dreiunddreißigsten und vierunddreißigsten Aspekt ist die Signalisierungseinrichtung (130;230;330; 500;740) ausgelegt, um die Signalisierung abhängig von einem Sprachpegel eines Benutzers des Telekommunikationsgeräts (100;200;300;704) auszugeben.

Gemäß einem sechsunddreißigsten Aspekt unter Bezugnahme auf den dreiunddreißigsten bis fünfunddreißigsten Aspekt ist die Signalisierungsreinrichtung (130;230;330;500;740) ausgelegt, um die Signalisierung abhängig von einer akustischen Lautstärke des Audiosignals an einem Ort des Telekommunikationsgeräts und/oder abhängig von einem elektrischen oder digitalisierten Signalpegel des empfangenen Audiosignals (110;210;310;710) auszugeben.

Ein siebenunddreißigster Aspekt umfasst ein Telekommunikationsgerät (600; 754) mit folgenden Merkmalen: einer Audiosignalempfangseinrichtung (650;760), die ausgelegt ist, um ein Audiosignal von einem weiteren Telekommunikationsgerät (100;200;300;400;704) zu empfangen und akustisch auszugeben; und einer Signalisierungseinrichtung (660;764), die ausgelegt ist, um eine Sprachverständlichkeit eines von einem Schallwandler des Telekommunikationsgeräts (600;754) erzeugten Sprachsignals für einen Dritten, der sich in einer Umgebung des Telekommunikationsgeräts befindet, abzuschätzen, und wobei die Signalisierungseinrichtung ausgelegt ist, um eine Signalisierung abhängig davon auszugeben.

Gemäß einem achtunddreißigsten Aspekt unter Bezugnahme auf den siebenunddreißigsten Aspekt ist die Signalisierungseinrichtung (660;764) ausgelegt, abzuschätzen, ob das Audiosignal (620;770) für einen Dritten, der sich in einer Umgebung des Telekommunikationsgeräts befindet, und der von einem Benutzer des Telekommunikationsgeräts verschieden ist, akustisch verständlich ist, und um die Signalisierung (420;530;630;640;790) abhängig davon auszugeben.

Gemäß einem neununddreißigsten Aspekt unter Bezugnahme auf den siebenunddreißigsten bis achtunddreißigsten Aspekt ist die Signalisierungseinrichtung (660;764) ausgelegt, um die Signalisierung abhängig von einer Lautstärke, mit der das Audiosignal (620;770) akustisch ausgegeben wird, zu bestimmen.

Gemäß einem vierzigsten Aspekt unter Bezugnahme auf den siebenunddreißigsten bis neununddreißigsten Aspekt ist die Signalisierungseinrichtung (660;764) ausgelegt, um die Signalisierung abhängig davon zu bestimmen, ob das Audiosignal (620;770) über einen für eine direkte Wiedergabe für einen einzelnen Benutzer bestimmten Schallwandler oder über einen für eine entfernte Wiedergabe an einen oder mehrere Benutzer bestimmten Schallwandler ausgegeben wird.

Gemäß einem einundvierzigsten Aspekt unter Bezugnahme auf den siebenunddreißigsten bis vierzigsten Aspekt ist das Telekommunikationsgerät ausgelegt, um die Signalisierung (640) über einen Übertragungsweg an das weitere Telekommunikationsgerät (100;200;300;400;704) zu senden.

Ein zweiundvierzigster Aspekt umfasst ein Telekommunikationssystem (700) zum Übertragen eines Audiosignals (710) von einem ersten Telekommunikationsgerät (400;704) zu einem zweiten Telekommunikationsgerät (600;754), mit folgenden Merkmalen: einem ersten Telekommunikationsgerät (400;704) mit einer Audiosignalübertragungseinrichtung (440;730), die ausgelegt ist, um ein Audiosignal (410;710) von einem Benutzer zu empfangen und zu einem zweiten Telekommunikationsgerät (600;754) zu übertragen; und einem zweiten Telekommunikationsgerät (600;754), wobei das zweite Telekommunikationsgerät ein Telekommunikationsgerät gemäß dem einunddreißigsten Aspekt ist, wobei die Audiosignalempfangseinrichtung (650;760) des zweiten Telekommunikationsgeräts ausgelegt ist, um ein Audiosignal von dem ersten Telekommunikationsgerät zu empfangen und akustisch auszugeben, und wobei die Signalisierungseinrichtung (660;764) des zweiten Telekommunikationsgeräts ausgelegt ist, um ein Signalisierungssignal (640;790) an das erste Telekommunikationsgerät auszugeben, wenn das durch das zweite Telekommunikationsgerät ausgegebene Audiosignal akustisch für Dritte verständlich ist, wobei die Signalisierungseinrichtung (660;764) des zweiten Telekommunikationsgeräts ausgelegt ist, um eine Sprachverständlichkeit eines von einem Schallwandler des zweiten Telekommunikationsgeräts (600;754) erzeugten Sprachsignals für einen Dritten, der sich in einer Umgebung des zweiten Telekommunikationsgeräts befindet, abzuschätzen, und wobei die Signalisierungseinrichtung des zweiten Telekommunikationsgeräts ausgelegt ist, um das Signalisierungssignal abhängig davon auszugeben; wobei das erste Telekommunikationsgerät eine Signalisierungseinrichtung (440;740) aufweist, die ausgelegt ist, um ansprechend auf ein von dem zweiten Telekommunikationsgerät empfangenes Signalisierungssignal (450;640;790) eine Signalisierung (420;720) auszugeben, um gegenüber einem Benutzer des ersten Telekommunikationsgeräts zu signalisieren, dass zu besorgen ist, dass das durch das zweite Telekommunikationsgerät ausgegebene Audiosignal (620;770) akustisch für Dritte verständlich ist oder eine Störung für Dritte darstellt

Ein dreiundvierzigster Aspekt umfasst ein Verfahren (800) zum Betrieb eines Telekommunikationsgeräts, mit folgenden Schritten: Empfangen (810) eines Audiosignals; Übertragen (820) des Audiosignals zu einem weiteren Telekommunikationsgerät; und Ausgeben (830) einer Signalisierung; wobei eine Sprachverständlichkeit eines von einem Benutzer des Telekommunikationsgeräts (100;200;300;704) erzeugten Sprachsignals für einen Dritten, der sich in einer Umgebung des Telekommunikationsgeräts befindet, abgeschätzt wird, und wobei die Signalisierung abhängig davon ausgegeben wird; wobei eine akustische Umgebung des Telekommunikationsgeräts bei einer Bestimmung oder Berechnung (560) der Sprachverständlichkeit berücksichtigt wird; wobei eine Störgeräuschmodulation und/oder eine Störgeräusch-Rauschhaftigkeit und/oder eine Nachhallzeit bei der Bestimmung oder Berechnung (560) der Sprachverständlichkeit berücksichtigt wird.

Ein vierundvierzigster Aspekt umfasst ein Verfahren (900) zum Betrieb eines Telekommunikationsgeräts, mit folgenden Schritten: Empfangen (910) eines Audiosignals von einem weiteren Telekommunikationsgerät; akustisches Ausgeben (920) des empfangenen Audiosignals; und Ausgeben (930) einer Signalisierung, wobei eine Sprachverständlichkeit eines von einem Schallwandler des Telekommunikationsgeräts (600;754) erzeugten Sprachsignals für einen Dritten, der sich in einer Umgebung des Telekommunikationsgeräts befindet, abgeschätzt wird, und wobei die Signalisierung abhängig davon ausgegeben wird.

Ein fünfundvierzigster Aspekt umfasst ein Computerprogramm zur Durchführung des Verfahrens gemäß dem siebenunddreißigsten oder achtunddreißigsten Aspekt wenn das Computerprogramm von einem Computer ausgeführt wird.

Ein sechsundvierzigster Aspekt umfasst Telekommunikationsgerät (100;200;300;400;704) mit folgenden Merkmalen: einer Audiosignalübertragungseinrichtung (130;230;330;430;730), die ausgelegt ist, um ein Audiosignal (110;210;310;410;710) zu empfangen und zu einem weiteren Telekommunikationsgerät (600;754) zu übertragen; und einer Signalisierungseinrichtung (140;240;340;440;500;740), die ausgelegt ist, um eine Signalisierung (120;220;320;420;520;720) auszugeben, wobei das Telekommunikationsgerät ausgelegt ist, um ein Signalisierungs-Übertragungssignal (450; 530; 790) von dem weiteren Telekommunikationsgerät (600; 754) zu empfangen, das anzeigt, ob zu besorgen ist, dass das Audiosignal (410; 510; 620; 770) nach Ausgabe durch einen Schallwandler des weiteren Telekommunikationsgeräts (600; 754) für einen Dritten, der sich in einer Umgebung des weiteren Telekommunikationsgeräts befindet, und der von einem Benutzer des weiteren Telekommunikationsgeräts verschieden ist, akustisch verständlich ist, wobei die Signalisierungseinrichtung ausgelegt ist, um eine Signalisierung zu veranlassen, wenn die Signalisierungseinrichtung eine entsprechende Information in dem Signalisierungs-Übertragungssignal findet, und um die Signalisierung zu deaktivieren, wenn das Signalisierungs-Übertragungssignal anzeigt, dass nicht zu besorgen ist, dass das Audiosignal akustisch für Dritte verständlich ist.

Ein siebenundvierzigster Aspekt umfasst ein Telekommunikationsgerät (100;200;300;400;704) mit folgenden Merkmalen: einer Audiosignalübertragungseinrichtung (130;230;330;430;730), die ausgelegt ist, um ein Audiosignal (110;210;310;410;710) zu empfangen und zu einem weiteren Telekommunikationsgerät (600;754) zu übertragen; und einer Signalisierungseinrichtung (140;240;340;440;500;740), die ausgelegt ist, um eine Signalisierung (120;220;320;420;520;720) auszugeben; wobei die Signalisierungseinrichtung (130;230;330;340;500;740) ausgelegt ist, um eine Information (576a) über eine Größe eines Gebiets, in dem zu besorgen ist, dass das Audiosignal akustisch für Dritte verständlich ist, abzuschätzen und auszugeben, wobei die Signalisierungseinrichtung ausgelegt ist, um abzuschätzen, in welchem Gebiet ein Verhältnis zwischen dem Audiosignal und Störgeräuschen einen bestimmten Wert erreicht oder überschreitet, wobei ein solches Gebiet durch die Signalisierungseinrichtung als Gebiet interpretiert wird, in dem zu besorgen ist, dass das Audiosignal akustisch für Dritte verständlich ist.

Ein achtundvierzigster Aspekt umfasst ein Telekommunikationsgerät (100;200;300;400;704) mit folgenden Merkmalen: einer Audiosignalübertragungseinrichtung (130;230;330;430;730), die ausgelegt ist, um ein Audiosignal (110;210;310;410;710) zu empfangen und zu einem weiteren Telekommunikationsgerät (600;754) zu übertragen; und einer Signalisierungseinrichtung (140;240;340;440;500;740), die ausgelegt ist, um eine Signalisierung (120;220;320;420;520;720) auszugeben, wenn das Audiosignal (110;210;310;410;620;710;770) akustisch für Dritte verständlich ist oder eine Störung für Dritte darstellt; wobei das Telekommunikationsgerät ausgelegt ist, um eine Störungs-Signalisierung (542) von einem Drittgerät, das von dem weiteren Telekommunikationsgerät (600;754) verschieden ist, zu empfangen, und wobei die Signalisierungseinrichtung ausgelegt ist, um die Störungs-Signalisierung bei einer Auswertung, ob das Audiosignal akustisch für Dritte verständlich ist oder eine Störung für Dritte darstellt, zu berücksichtigen.

Gemäß einem neunundvierzigsten Aspekt unter Bezugnahme auf den achtundvierzigsten Aspekt ist das Telekommunikationsgerät ausgelegt, um die Störungssignalisierung nicht unreflektiert an den Benutzer weitergeben, sondern durch Verwendung der Signalisierungseinrichtung zu prüfen, ob tatsächlich eine Störung Dritter zu besorgen ist.

## Patentansprüche

1. Telekommunikationsgerät (100;200;300;400;704) mit folgenden Merkmalen:
einer Signalisierungseinrichtung (140;240;340;440;500;740), die ausgelegt ist, um eine Sprachverständlichkeit eines von einem Benutzer des Telekommunikationsgeräts (100;200;300;704) erzeugten Sprachsignals für einen Dritten, der sich in einer Umgebung des Telekommunikationsgeräts befindet, abzuschätzen, und wobei die Signalisierungseinrichtung ausgelegt ist, um eine Signalisierung abhängig davon auszugeben;
wobei die Signalisierungseinrichtung (130;230;330;500;740) ausgelegt ist, um eine akustische Umgebung des Telekommunikationsgeräts bei einer Abschätzung (560) der Sprachverständlichkeit zu berücksichtigen;
wobei die Signalisierungseinrichtung (130;230;330;500;740) ausgelegt ist, um einen Frequenzgehalt eines Störgeräusches und/oder eine Störgeräuschmodulation und/oder eine Störgeräusch-Rauschhaftigkeit und/oder eine Nachhallzeit bei der Abschätzung (560) der Sprachverständlichkeit zu berücksichtigen.

2. Telekommunikationsgerät (100;200;300;704) gemäß Anspruch 1, wobei die Signalisierungseinrichtung ausgelegt ist, um das empfangene Audiosignal (110;210;310;510) auszuwerten, um abzuschätzen, ob das Audiosignal (110;210;310;510) für einen Dritten, der sich in einer Umgebung des Telekommunikationsgeräts (100;200;300;704) befindet, und der von einem Benutzer des Telekommunikationsgeräts verschieden ist, akustisch verständlich ist, und/oder wobei die Signalisierungseinrichtung ausgelegt ist, um ein Signal von einem separaten Schallwandler (520) auszuwerten, um abzuschätzen, ob das Audiosignal für einen Dritten, der sich in einer Umgebung des Telekommunikationsgeräts befindet, und der von einem Benutzer des Telekommunikationsgeräts verschieden ist, akustisch verständlich ist.

3. Telekommunikationsgerät (100;200;300;704) gemäß einem der Ansprüche 1 bis 2, wobei die Signalisierungseinrichtung (130;230;330; 500;740) ausgelegt ist, um die Signalisierung abhängig von einem Sprachpegel eines Benutzers des Telekommunikationsgeräts (100;200;300;704) auszugeben.

4. Telekommunikationsgerät (100;200;300;704) gemäß einem der Ansprüche 1 bis 3, wobei die Signalisierungsreinrichtung (130;230;330;500;740) ausgelegt ist, um die Signalisierung abhängig von einer akustischen Lautstärke des Audiosignals an einem Ort des Telekommunikationsgeräts und/oder abhängig von einem elektrischen oder digitalisierten Signalpegel des empfangenen Audiosignals (110;210;310;710) auszugeben.

5. Telekommunikationsgerät (600; 754) mit folgenden Merkmalen:
einer Signalisierungseinrichtung (660;764), die ausgelegt ist, um eine Sprachverständlichkeit eines von einem Schallwandler des Telekommunikationsgeräts (600;754) erzeugten Audiosignals für einen Dritten, der sich in einer Umgebung des Telekommunikationsgeräts befindet, abzuschätzen, und wobei die Signalisierungseinrichtung ausgelegt ist, um eine Signalisierung abhängig davon auszugeben.

6. Telekommunikationsgerät (600;754) gemäß Anspruch 5, wobei die Signalisierungseinrichtung (660;764) ausgelegt ist, abzuschätzen, ob das Audiosignal (620;770) für einen Dritten, der sich in einer Umgebung des Telekommunikationsgeräts befindet, und der von einem Benutzer des Telekommunikationsgeräts verschieden ist, akustisch verständlich ist, und um die Signalisierung (420;530;630;640;790) abhängig davon auszugeben.

7. Telekommunikationsgerät (600;754) gemäß einem der Ansprüche 5 bis 6, wobei die Signalisierungseinrichtung (660;764) ausgelegt ist, um die Signalisierung abhängig von einer Lautstärke, mit der das Audiosignal (620;770) akustisch ausgegeben wird, zu bestimmen.

8. Telekommunikationsgerät (600;754) gemäß einem der Ansprüche 5 bis 7, wobei die Signalisierungseinrichtung (660;764) ausgelegt ist, um die Signalisierung abhängig davon zu bestimmen, ob das Audiosignal (620;770) über einen für eine direkte Wiedergabe für einen einzelnen Benutzer bestimmten Schallwandler oder über einen für eine entfernte Wiedergabe an einen oder mehrere Benutzer bestimmten Schallwandler ausgegeben wird.

9. Telekommunikationsgerät (600;754) gemäß einem der Ansprüche 5 bis 8, wobei das Telekommunikationsgerät ausgelegt ist, um die Signalisierung (640) über einen Übertragungsweg an das weitere Telekommunikationsgerät (100;200;300;400;704) zu senden.

10. Telekommunikationssystem (700) zum Übertragen eines Audiosignals (710) von einem ersten Telekommunikationsgerät (400;704) zu einem zweiten Telekommunikationsgerät (600;754), mit folgenden Merkmalen:
einem ersten Telekommunikationsgerät (400;704) mit einer Audiosignalübertragungseinrichtung (440;730), die ausgelegt ist, um ein Audiosignal (410;710) von einem Benutzer zu empfangen und zu einem zweiten Telekommunikationsgerät (600;754) zu übertragen; und
einem zweiten Telekommunikationsgerät (600;754), wobei das zweite Telekommunikationsgerät ein Telekommunikationsgerät gemäß Anspruch 5 ist,
wobei die Audiosignalempfangseinrichtung (650;760) des zweiten Telekommunikationsgeräts ausgelegt ist, um ein Audiosignal von dem ersten Telekommunikationsgerät zu empfangen und akustisch auszugeben, und
wobei die Signalisierungseinrichtung (660;764) des zweiten Telekommunikationsgeräts ausgelegt ist, um ein Signalisierungssignal (640;790) an das erste Telekommunikationsgerät auszugeben, wenn das durch das zweite Telekommunikationsgerät ausgegebene Audiosignal akustisch für Dritte verständlich ist,
wobei die Signalisierungseinrichtung (660;764) des zweiten Telekommunikationsgeräts ausgelegt ist, um eine Sprachverständlichkeit eines von einem Schallwandler des zweiten Telekommunikationsgeräts (600;754) erzeugten Sprachsignals für einen Dritten, der sich in einer Umgebung des zweiten Telekommunikationsgeräts befindet, abzuschätzen, und wobei die Signalisierungseinrichtung des zweiten Telekommunikationsgeräts ausgelegt ist, um das Signalisierungssignal abhängig davon auszugeben;
wobei das erste Telekommunikationsgerät eine Signalisierungseinrichtung (440;740) aufweist, die ausgelegt ist, um ansprechend auf ein von dem zweiten Telekommunikationsgerät empfangenes Signalisierungssignal (450;640;790) eine Signalisierung (420;720) auszugeben, um gegenüber einem Benutzer des ersten Telekommunikationsgeräts zu signalisieren, dass zu besorgen ist, dass das durch das zweite Telekommunikationsgerät ausgegebene Audiosignal (620;770) akustisch für Dritte verständlich ist oder eine Störung für Dritte darstellt

11. Verfahren (800) zum Betrieb eines Telekommunikationsgeräts, mit folgenden Schritten:
Empfangen (810) eines Audiosignals;
Bereitstellen eines Übertragungssignals (112) basierend auf dem Audiosignal; und
Ausgeben (830) einer Signalisierung;
wobei eine Sprachverständlichkeit eines von einem Benutzer des Telekommunikationsgeräts (100;200;300;704) erzeugten Sprachsignals für einen Dritten, der sich in einer Umgebung des Telekommunikationsgeräts befindet, abgeschätzt wird, und wobei die Signalisierung abhängig davon ausgegeben wird;
wobei eine akustische Umgebung des Telekommunikationsgeräts bei einer Bestimmung oder Berechnung (560) der Sprachverständlichkeit berücksichtigt wird;
wobei ein Frequenzgehalt eines Störgeräusches und/oder eine Störgeräuschmodulation und/oder eine Störgeräusch-Rauschhaftigkeit und/oder eine Nachhallzeit bei der Bestimmung oder Berechnung (560) der Sprachverständlichkeit berücksichtigt wird.

12. Verfahren (900) zum Betrieb eines Telekommunikationsgeräts, mit folgenden Schritten:
Ausgeben (930) einer Signalisierung,
wobei eine Sprachverständlichkeit eines von einem Schallwandler des Telekommunikationsgeräts (600;754) erzeugten Audiosignals für einen Dritten, der sich in einer Umgebung des Telekommunikationsgeräts befindet, abgeschätzt wird, und wobei die Signalisierung abhängig davon ausgegeben wird.

13. Computerprogramm zur Durchführung des Verfahrens gemäß Anspruch 11 oder 12 wenn das Computerprogramm von einem Computer ausgeführt wird.

14. Telekommunikationsgerät (100;200;300;400;704) mit folgenden Merkmalen:
einer Audiosignalübertragungseinrichtung (130;230;330;430;730), die ausgelegt ist, um ein Audiosignal (110;210;310;410;710) zu empfangen und um basierend darauf ein Übertragungssignal (112) bereitzustellen;
einer Signalisierungseinrichtung (140;240;340;440;500;740), die ausgelegt ist, um eine Sprachverständlichkeit eines von einem Benutzer des Telekommunikationsgeräts (100;200;300;704) erzeugten Sprachsignals für einen Dritten, der sich in einer Umgebung des Telekommunikationsgeräts befindet, abzuschätzen, und wobei die Signalisierungseinrichtung ausgelegt ist, um eine Signalisierung abhängig davon auszugeben;
wobei die Signalisierungseinrichtung (130;230;330;500;740) ausgelegt ist, um eine akustische Umgebung des Telekommunikationsgeräts bei einer Abschätzung (560) der Sprachverständlichkeit zu berücksichtigen;
wobei die Signalisierungseinrichtung (130;230;330;500;740) ausgelegt ist, um einen Frequenzgehalt eines Störgeräusches und/oder eine Störgeräuschmodulation und/oder eine Störgeräusch-Rauschhaftigkeit und/oder eine Nachhallzeit bei der Abschätzung (560) der Sprachverständlichkeit zu berücksichtigen.

15. Telekommunikationsgerät (600; 754) mit folgenden Merkmalen:
einer Audiosignalempfangseinrichtung (650;760), die ausgelegt ist, um eine Audiosignaldarstellung von einem weiteren Telekommunikationsgerät (100;200;300;400;704) zu empfangen und akustisch auszugeben; und
einer Signalisierungseinrichtung (660;764), die ausgelegt ist, um eine Sprachverständlichkeit eines von einem Schallwandler des Telekommunikationsgeräts (600;754) erzeugten Audiosignals für einen Dritten, der sich in einer Umgebung des Telekommunikationsgeräts befindet, abzuschätzen, und wobei die Signalisierungseinrichtung ausgelegt ist, um eine Signalisierung abhängig davon auszugeben.
